(19) Europäisches Patentamt / European Patent Office / Office européen des brevets

(11) **EP 3 083 732 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **14821105.5**

(22) Anmeldetag: **15.12.2014**

(51) Int Cl.:
*C08G 18/12* (2006.01)     *C08G 18/42* (2006.01)
*C09J 175/06* (2006.01)

(86) Internationale Anmeldenummer:
**PCT/EP2014/077695**

(87) Internationale Veröffentlichungsnummer:
**WO 2015/091325 (25.06.2015 Gazette 2015/25)**

(54) **BIOLOGISCH ABBAUBARER HAFTKLEBSTOFF AUF BASIS VON POLYESTER-POLYURETHAN**

BIODEGRADABLE, PRESSURE-SENSITIVE ADHESIVE BASED ON POLYESTER-POLYURETHANE

COLLE AUTO-ADHÉSIVE BIODÉGRADABLE À BASE DE POLYURÉTHANE DE POLYESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013 DE 102013226031**

(43) Veröffentlichungstag der Anmeldung:
**26.10.2016 Patentblatt 2016/43**

(73) Patentinhaber: **tesa SE**
**22848 Norderstedt (DE)**

(72) Erfinder:
• IHRIG, Ralf
25451 Quickborn (DE)
• SCHÜMANN, Uwe
25421 Pinneberg (DE)
• SPIES, Manfred
24576 Bad Bramstedt (DE)
• WEILAND, Kirstin
21035 Hamburg (DE)

(56) Entgegenhaltungen:
EP-A1- 2 325 220     DE-A1- 19 532 771

EP 3 083 732 B1

**Beschreibung**

Die Erfindung betrifft die Zusammensetzung eines haftklebrigen, biologisch abbaubaren Polyester-Polyurethans, ein Verfahren zu dessen Herstellung, dessen chemische Vernetzung sowie die Verwendung in einem Klebeband oder in einer Adhäsionsfolie.

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ * cos$(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ * sin$(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10^0$ bis $10^1$ rad/sec, G' zumindest zum Teil im Bereich von $10^3$ bis 107 Pa liegt und wenn G" ebenfalls zumindest zum Teil in diesem Bereich liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Eine besondere Form von Haftung aufbauenden Stoffen liegt den Adhäsionsfolien zugrunde. Adhäsionsfolien sind dadurch charakterisiert, dass sie keine oder nur eine sehr geringe fühlbare Klebrigkeit haben, aber dennoch an Gegenständen mit glatter Oberfläche relativ gut haften. Der Hafteffekt (die Adhäsion) wird elektrostatischen Anziehungskräften zugeschrieben. Da elektrostatische Anziehungskräfte auch bei gewöhnlichen Kleb- oder Haftklebstoffen eine Rolle spielen und da die chemischen Zusammensetzungen der Adhäsionsfolienoberflächen sich nicht grundlegend von denen üblicher Kleb- oder Haftklebstoffe unterscheiden, müssen die Unterschiede zwischen einer üblichen Haftklebstoff- und einer Adhäsionsfolienoberfläche als graduell betrachtet werden. In Bezug auf das viskoelastische Fenster können die Haftung aufbauenden Stoffe der Adhäsionsfolien in der Regel in den Bereich mit niedrigem G" und mittleren bis hohen G' eingeordnet werden. Haftung aufbauende Stoffe dieser Art werden in dieser Schrift als Haftstoffe bezeichnet. Bei diesen Stoffen können G' und G" auch außerhalb der die Haftklebstoffe charakterisierenden Grenzen liegen.

Adhäsionsfolien (englisch: cling films oder static cling films) sind in vielfältiger Weise bekannt. In GB 2 128 199 A werden beispielsweise Polyolefin-Zusammensetzungen mit möglichen $\alpha$-Olefin-Anteilen sowie in WO 98/39157 A1 mit Anteilen an StyrolBlockcopolymeren zur Erzielung der Adhäsionseigenschaften vorgeschlagen. Polyolefin-Zusammensetzungen sowie Zusammensetzungen, die Ethylenvinylacetat-Copolymere enthalten, sind auch in WO 99/14261 A1 beschrieben. In WO 98/39157 A1 werden weiterhin verschiedene thermoplastische Elastomere erwähnt, zum Beispiel Copolyester, Polyurethane und Polyamide. In EP 1 849 811 B1 werden vernetzte Polyurethane zur Herstellung von Adhäsionsfolien vorgeschlagen.

Aus einer Reihe von Schriften sind Adhäsionsfolien aus weich gemachtem PVC oder anderen weichgemachten Polymeren bekannt. Beispiele sind in US 5,698,621 A, GB 2 368 300 A, DE 202 08 094 U, DE 100 12 261 A1, WO 01/68364 A1 oder WO 97/00772 A1 zu finden. In US 5,292,560 A werden Adhäsionsfolien auf Basis Polyethylacrylat beschrieben.

Verwendung finden Adhäsionsfolien zum Beispiel als Displayschutz oder zum Anbringen von Informationen an Autoscheiben, zum Beispiel für Preisauszeichnungen.

So schlägt die DE 197 22 627 A1 die Verwendung einer Adhäsionsfolie zum Befestigen von Magnetstreifen- oder Chip-Karten auf einer Unterlage vor, insbesondere einem Papierbogen.

In EP 1 656 669 B1 wird die Verwendung einer Adhäsionsfolie für das Befestigen und gleichzeitige Abdecken und Schützen von optischen Speichermedien vorgeschlagen.

Ein chemisch vernetzter Haftklebstoff oder Haftstoff liegt vor, wenn der Haftklebstoff oder Haftstoff durch eine chemische Umsetzung mit einem Vernetzer einen Zustand erreicht hat, der ihn nicht mehr schmelzbar und nicht mehr in organischen Lösemitteln lösbar macht. Eine Verflüssigung ist dann nur noch durch Zersetzung möglich, die irreversibel ist. Als Vernetzer kommen alle mindestens difunktionellen Stoffe in Betracht, die mit den funktionellen Gruppen des Haftklebstoffes oder Haftstoffes chemische Vernetzungsreaktionen eingehen können. Ihre Auswahl richtet sich nach den funktionellen Gruppen des Haftklebstoffes oder Haftstoffes. Carboxylgruppen tragende Haftklebstoffe oder Haftstoffe werden typischerweise mit Di- oder Polyepoxiden, eventuell unter zusätzlicher Katalyse, beispielsweise durch tertiäre Amine, oder mit Metallacetylacetonaten, Metallalkoxiden sowie Alkoxy-Metallacetylacetonaten vernetzt.

Für die Vernetzung von Hydroxylgruppen tragenden Haftklebstoffen oder Haftstoffen bieten sich beispielsweise Di- oder Polyisocyanate an.

Polymere oder Prepolymere, die die Eigenschaft besitzen, schmelzfähig und somit thermoplastisch verarbeitbar zu sein, werden in dieser Schrift, wie im Sprachgebrauch des Fachmanns üblich, als Hotmelts bezeichnet.

Unter einem Polyurethan-Hotmelt-Prepolymer wird in dieser Schrift ein durch chemische Umsetzung mehrerer Polyole mit einem oder mehreren Polyisocyanaten erhaltenes insbesondere schmelzfähiges Reaktionsprodukt verstanden, das bei Raumtemperatur derart fest und formstabil ist, dass in bekannten Mischaggregaten bei Raumtemperatur ein kontinuierliches, homogenes Mischen mit weiteren Stoffen sowie insbesondere auch eine Ausformung oder ähnliche Verarbeitungsschritte nicht möglich ist, ohne dass es dabei zur Erwärmung des Polyurethan-Hotmelt-Prepolymers kommt oder ohne dass ein Hinzufügen von Lösemitteln, Verdünnungsmitteln oder anderer, die Viskosität herabsetzender Zusatzstoffe notwendig ist. Bekannte Mischaggregate sind beispielsweise Kneter, Innenmischer, Extruder, Planetwalzenextruder, Planetenmischer, Butterfly-Mischer oder Dissolver. Die Verarbeitbarkeit eines Polyurethan-Hotmelt-Prepolymers im Sinne dieser Schrift ist erst dann möglich, wenn das Polyurethan-Hotmelt-Prepolymer in einem Lösemitteln aufgelöst oder wenn es erwärmt wird, wobei die Wärme von außen durch Beheizung zugeführt oder durch Scherung erzeugt werden kann. Typische Verarbeitungstemperaturen für Polyurethan-Hotmelt-Prepolymere im Sinne dieser Schrift liegen im Bereich von 70° bis 160 °C, mindestens betragen sie 40 °C. Als Raumtemperatur wird in dieser Schrift 23 °C verstanden. Schmelzen bedeutet in diesem Sinne nicht notwendigerweise, dass im Moment des Überganges vom festen, formstabilen Zustand zum verflüssigten, mischbaren Zustand eine kristalline Schmelztemperatur oder eine glasartige Erstarrungstemperatur überschritten werden muss. Gemeint ist an dieser Stelle eine ausreichende Erniedrigung der Viskosität.

Ein Polyurethan-Hotmelt-Prepolymer im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10 rad/s gemessene komplexe Viskosität von mindestens 1000 Pa*s, vorzugsweise mindestens 3000 Pa*s.

**EP 3 083 732 B1**

Die komplexe Viskosität η* ist folgendermaßen definiert: η* = G* / ω
(G* = komplexer Schubmodul, ω = Winkelfrequenz).

Die weiteren Definitionen lauten:

$$G^* = \sqrt{(G')^2 + (G'')^2}$$

(G" = Viskositätsmodul (Verlustmodul), G' = Elastizitätsmodul (Speichermodul)).
G" = τ/γ •sin(δ) (τ = Schubspannung, γ = Deformation, δ = Phasenwinkel = Phasenverschiebung zwischen Schubspannungs- und Deformationsvektor).
G' = τ/γ •cos(δ) (τ = Schubspannung, γ = Deformation, δ = Phasenwinkel = Phasenverschiebung zwischen Schub-spannungs- und Deformationsvektor).

$$\omega = 2\pi \cdot f \ (f = \text{Frequenz}).$$

EP 2 325 220 A1 beschreibt einen Haftklebstoff auf Basis von Polyurethan, wobei das Polyurethan das chemische Umsetzungsprodukt aus zumindest folgenden Ausgangsstoffen umfasst:

a) Polyisocyanate umfassend zumindest ein aliphatisches oder alicyclisches Diisocyanat und zumindest ein aliphatisches oder alicyclisches Polyisocyanat mit einer Isocyanat-Funktionalität von drei oder größer drei,
wobei der Stoffmengenanteil der aliphatischen oder alicyclischen Polyisocyanate mit einer Isocyanat-Funktionalität von drei oder größer drei an den Polyisocyanaten mindestens 18 Prozent beträgt, und
b) zumindest ein haftklebriges, hydroxyl-funktionalisiertes Polyurethan-Prepolymer.

Klebebänder, die mit Haftklebstoffen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einem Haftklebstoff ausgerüstet ist. Es gibt auch Haftklebebänder, die ausschließlich aus einer Haftklebstoffschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.
Die Haftklebstoffe bestehen üblicherweise aus Acrylat-Copolymeren, Silikonen, Naturkautschuk, Synthesekautschuk, Styrolblockcopolymeren oder Polyurethanen.
Aufgrund von ökologischen Gesichtspunkten gibt es seit einigen Jahren die Bestrebung, Kunststoffe so zu gestalten, dass sie biologisch abbaubar sind. Vor allem im Verpackungs- und Transportschutzbereich bieten biologisch abbaubare Kunststoffe ein großes Potential zur Reduzierung des Abfallaufkommens nicht verrottender Kunststoffe.
Bioabbaubare Polymere ist eine Bezeichnung für natürliche und synthetische Polymere, die kunststoffähnliche Eigenschaften (Kerbschlagzähigkeit, Thermoplastifizierbarkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden; dies passiert nicht notwendigerweise unter üblichen Haushaltsbedingungen (Kompostierung im Garten). Eine Definition der Bioabbaubarkeit findet sich in den Europäischen Normen DIN EN 13432 (biologischer Abbau von Verpackungen) und DIN EN 14995 (Kompostierbarkeit von Kunststoffen).
Der Fachmann unterscheidet zwischen der Desintegration (Zersetzung) und der biologischen Abbaubarkeit.
Die Desintegration (Zersetzung) bezeichnet die physikalische Zerlegung in sehr kleine Fragmente.
Die Bestimmung der Desintegrierbarkeit (des Zersetzungsgrades) von Polymeren unter nachgebildeten Kompostierungsbedingungen im Labormaßstab wird unter anderem in der DIN EN ISO 20200 beschrieben. Hierbei wird die zu untersuchende Probe in einem definierten künstlichen Feststoffabfall bei 58 ± 2 °C für mindestens 45 und höchstens 90 Tage gelagert. Anschließend wird die gesamte Probe durch ein 2 mm Sieb gesiebt und der Zersetzungsgrad D wie folgt bestimmt.

$$D = \frac{m_i - m_r}{m_i} \times 100$$

Dabei ist

$m_i$:    die anfängliche Trockenmasse des Probenmaterials
$m_r$:    die Trockenmasse des restlichen, durch Sieben erhaltenen Probenmaterials

4

Unter der biologischen Abbaubarkeit versteht man im Allgemeinen die Zerlegung einer chemischen Verbindung oder eines organischen Materials durch Mikroorganismen in Gegenwart von Sauerstoff in Kohlendioxid, Wasser und Salze anderer vorhandener Elemente (Mineralisation) unter Bildung neuer Biomasse oder in Abwesenheit von Sauerstoff in Kohlenstoffdioxid, Methan, Mineralsalze und neue Biomasse. Der biologische Abbau erfolgt extra- und/oder intrazellulär durch Bakterien, Pilze und Mikroorganismen, sowie deren Enzyme.

Der Abbauvorgang kann in zwei Teilschritte unterteilt werden. Zunächst beginnt die Hydrolysereaktion, ausgelöst durch Enzyme und der Anwesenheit von Wasser. Liegen hydrolytisch instabile Bindungen vor, werden diese degradiert. Im günstigsten Fall tritt die Zersetzung der Spaltprodukte durch den abschließenden Zersetzungsvorgang in unschädliche Nebenprodukte ein. Am Ende steht eine vollständige Verstoffwechselung der Ausgangsstoffe zu $CO_2$, $H_2O$ und Biomasse.

Die biologische Abbaubarkeit von Verpackungsmaterialien wird in der DIN EN 13432 "Anforderungen an die Verwertung von Verpackungen durch Kompostierung und biologischen Abbau" normativ geregelt. Hierbei wird das zu prüfende Material einem aeroben Abbautest gemäß ISO 14855:1999 *"Bestimmung der vollständigen aeroben Bioabbaubarkeit von Kunststoff-Materialien unter den Bedingungen kontrollierter Kompostierung"* unterzogen und innerhalb von maximal sechs Monaten muss im Vergleich zu einer geeigneten Referenzsubstanz ein Abbaugrad von mindestens 90% erreicht werden. Der Abbaugrad wird dabei durch die gemessene Kohlenstoffdioxidentwicklung bestimmt. Die zerkleinerte Probe wird mit Vermiculit oder gut arbeitendem belüftetem Kompost als Inokulum in einem mit Luftzufuhr ausgestattetem Gefäß bei 58 $\pm$ 2 °C gelagert und die $CO_2$-Entwicklung fortlaufend aufgezeichnet. Aufgrund der apparativen Komplexität gibt es eine Reihe von Prüfinstituten, die sich auf die Prüfung spezialisiert haben und anschließend ein entsprechendes Zertifikat, wie etwa das OK compost von Vingotte ausstellen.

Nach Beendigung der Prüfung ergibt sich die Abbaurate $D_t$ als:

$$D_t = \frac{(CO_2)_T - (CO_2)_B}{ThCO_2} \times 100$$

Dabei ist

$(CO_2)_T$: die kumulative Menge des in jedem die Prüfsubstanz enthaltendem Kompostiergefäß gebildeten Kohlendioxides, in Gramm je Gefäß

$(CO_2)_B$: die mittlere kumulative Menge an Kohlendioxid, das in den Blindwertgefäßen gebildet wird, in Gramm je Gefäß

$ThCO_2$: die theoretische Menge an Kohlendioxid, das durch die Prüfsubstanz gebildet werden kann, in Gramm je Gefäß

Neben der biologischen Abbaubarkeit beinhaltet die DIN EN 13432 auch einen Test zur Bestimmung der Qualität des durch den Abbau entstehenden Komposts. Dieser darf keine negativen Auswirkungen auf das Pflanzenwachstum haben.

In der Regel weisen biologisch abbaubare Komponenten auch eine hohe Desintegrationsrate auf, wohingegen die Desintegration eines Werkstoffs nicht zwingend auf eine biologische Abbaubarkeit schließen lässt. Sehr häufig ist es aber der Fall, so dass der Desintegrationstest als geeigneter Vortest angesehen werden kann, dessen Vorteil darin besteht, zeitlich und apparativ weniger aufwändig zu sein.

Aufgrund der Tatsache, dass ökologische Aspekte, die die biologische Abbaubarkeit betreffen, auch für Haftklebebänder eine immer wichtigere Rolle spielen, wurden in der Vergangenheit auch Haftklebebänder vorgestellt, die als Trägermaterial biologisch abbaubare Folien verwenden. Die verwendeten Folien basieren häufig auf Polymilchsäurecompounds. Polymilchsäure ist ebenso wie weitere biologisch abbaubare und für die Anwendung in Frage kommende thermoplastische Polymere relativ hart und spröde. Um für Folienanwendungen geeignet zu sein, müssen diese in Betracht kommenden biologisch abbaubaren Polymere mit weicheren Polymeren compoundiert werden, die häufig nicht oder schlechter biologisch abbaubar sind.

Hinsichtlich der Haftklebstoffe sind die Möglichkeiten weiter eingeschränkt. Haftklebstoffe sind amorphe Materialien mit niedrigem Glasübergangspunkt.

Die klassischen Gerüstpolymere wie Naturkautschuk, Styrolblockcopolymere oder Polyacrylate sind gemäß den in Europa zugrunde liegenden Normen wie zum Beispiel der DIN EN 13432 nicht biologisch abbaubar. Gleiches gilt für die üblichen Tackifierharze wie Kolophoniumderivate, Kohlenwasserstoffharze oder Terpenphenolharze. Siliconhaftklebstoffe scheiden aufgrund ihrer hervorragenden Alterungsstabilität gänzlich aus. Kriterium für eine biologische Abbaubarkeit ist üblicherweise das Vorhandensein von Heteroatomen in der Kohlenstoffhauptkette. Eine chemische Bindung zwischen

EP 3 083 732 B1

einem Kohlenstoffatom und einem Heteroatom wie zum Beispiel Sauerstoff oder Stickstoff ist instabiler und damit einem biologischen Abbau leichter zugänglich als eine Bindung zwischen zwei Kohlenstoffatomen.

Aufgrund dieser Gegebenheiten bieten sich Polyesterhaftklebstoffe für entsprechende Anwendungen an. Polyesterhaftklebstoffe haben häufig den Nachteil, dass die Anfassklebkraft dieser Klebsysteme sich auf einem relativ niedrigen Niveau befindet. Der Zusatz von üblichen verträglichen Tackifiern wie zum Beispiel Klebharzen würde hier zwar einerseits für Abhilfe sorgen, andererseits aber auf Kosten einer schlechteren biologischen Abbaubarkeit gehen.

In JP 2007 070 422 A1 wird ein biologisch abbaubarer Haftklebstoff auf Basis eines Polyesterpolyurethans beschrieben, der aber aufgrund des niedrigen Schmelzpunktes den Nachteil hat, bei Raumtemperatur nicht formstabil zu sein, solange er nicht vernetzt vorliegt. Nicht formstabile Reaktivsysteme haben aber im Hinblick auf eine kontinuierliche Beschichtung, die in der Regel den zentralen Prozessschritt einer üblichen Klebebandfertigung darstellt, den Nachteil, dass sie in diesem Zustand nicht oder zumindest nicht mit konstanter Schichtdicke auf einem Trägermaterial aufgewickelt werden können, insbesondere dann nicht, wenn es sich um hohe Schichtdicken handelt. Mit konstanter Schichtdicke können nur Polymerfilme aufgewickelt werden, die auch unter dem Druck, der im Inneren einer Klebebandrolle beim Aufwickeln entsteht, formstabil sind. Zudem lehrt JP 2007 070 422 A1 nicht, wie ein biologisch abbaubarer Haftklebstoff formuliert sein muss, damit er für Verklebungsanwendungen beim Transportschutz, insbesondere dort, wo es um das temporäre Kleben auf empfindlichen Oberflächen geht, geeignet ist. Bei solchen Anwendungen kommt es auf eine leichte und vor allem rückstandsfreie Wiederablösbarkeit bei gleichzeitig ausreichender Klebleistung an. Die rückstandsfreie Wiederablösbarkeit muss auch nach längeren Lagerzeiten bei höheren Temperaturen sowie nach Lagerungen im Feuchtwärmeklima gegeben sein. Hinweise, wie dies erreicht werden kann, werden in JP 2007 070 422 A1 nicht gegeben.

Aus JP 63 189 486 A ist ein feuchtigkeitshärtender Haftklebstoff auf Basis eines Polyesterpolyurethans bekannt. Feuchtigkeitshärtende Haftklebstoffe sind für die Verwendung in Klebebändern problematisch, da ein effektiver Schutz vor Feuchtigkeitszutritt vor der Applikation notwendig ist.

In JP 08 157 798 A wird vorgeschlagen, ein flüssiges Polycaprolacton-Diol und eine Dicarbonsäure mit Di- oder Polyisocyanaten zu einem Haftklebstoff umzusetzen. Haftklebstoffe, die nur aus difunktionellen NCO-reaktiven Bausteinen aufgebaut sind, haben in der Regel den Nachteil, dass mit ihnen für viele Anwendungen keine Kombination aus genügend hoher Scherfestigkeit (Kohäsion) und genügend hoher Klebkraft (Adhäsion) erzielbar ist. Zudem löst JP 08 157 798 A nicht die Aufgabe, einen biologisch abbaubaren Haftklebstoff unter Realisierung einer hohen Beschichtungsgeschwindigkeit gleichzeitig chemisch zu vernetzen. Da in JP 08 157 798 A die Verfestigung an das Voranschreiten der chemischen Reaktion zum Polyurethan gekoppelt ist, wird eine gewisse Zeit benötigt, bis ein solches Produkt aufgewickelt werden kann. Somit sind solche Systeme in der Beschichtungsgeschwindigkeit limitiert.

DE 195 32 771 A1 hat biologisch abbaubare Polyester zum Gegenstand, bei denen es sich um hochmolekulare statistische Copolyester handelt, die unter Verwendung eines aliphatischen Polyols, einer aromatischen Polycarbonsäure und einer aliphatischen Polycarbonsäure als Monomerkomponenten hergestellt worden sind und konstitutionelle Repetiereinheiten besitzen, die

(i) einerseits aus Polyol und aromatischer Polycarbonsäure und
(ii) andererseits aus Polyol und aliphatischer Polycarbonsäure bestehen,

wobei mehr als 90 % der Einheiten (i) mit keiner oder mit höchstens einer weiteren Einheit (i) unmittelbar verknüpft sind und die Polyester unter Verwendung eines Diisocyanats als zusätzlicher Monomerkomponente hergestellt worden sind, wobei das Isocyanat im Vergleich zu jeder der anderen Monomerkomponenten in geringerer Menge verwendet worden ist.

Aufgabe der Erfindung ist es, hier Abhilfe zu schaffen und eine Möglichkeit aufzuzeigen, mit der Haftklebstoffe für technische Anwendungen zugänglich sind, die das Eigenschaftsprofil von üblichen Haftklebstoffen zeigen und die biologisch abbaubar sind. Die Haftklebstoffe sollen insbesondere hinsichtlich ihrer klebtechnischen Eigenschaften breit einstellbar sein, wobei sie so ausgeführt werden können sollen, dass sowohl eine hohe Kohäsion als auch ein hohes Adhäsionsvermögen erreicht werden können. Sie sollen insbesondere eine auch so formuliert werden können, dass sie eine gute Scherfestigkeit besitzen. Es soll aber auch möglich sein, sie so zu formulieren, dass sie leicht und rückstandsfrei vom Untergrund abgelöst werden können und dass sie keine oder nur eine sehr geringe fühlbare Klebrigkeit (Tack) haben. Eine leichte und rückstandsfreie Ablösbarkeit soll auch dann möglich sein, wenn die verklebten Proben zuvor im Feuchtwärmeklima, zum Beispiel 7 Tage bei 40 °C und 98 % relative Luftfeuchtigkeit oder in der Wärme, zum Beispiel drei Wochen bei 60 °C gelagert wurden. Sie sollen bei Bedarf chemisch vernetzbar sein. Weiterhin sollen sie vorteilhaft in einem kontinuierlichen Beschichtungsprozess herstellbar sein, ohne dass es notwendig ist, einen chemischen Reaktionsfortschritt abwarten zu müssen, bis sich der Haftklebstoff genügend verfestigt hat, um aufgewickelt werden zu können. Demgemäß soll es möglich sein, die Haftklebstoffe so zu formulieren, dass sie bereits vor dem Einsetzen einer Vernetzungsreaktion eine genügend hohe Viskosität haben, um in einem kontinuierlichen Beschichtungsprozess auf einem Trennliner oder einem Trägermaterial aufgewickelt werden zu können, ohne dass es dabei am Rand des Trennliners oder Trägermaterials zum Ausquetschen der Haftklebstoffmasse kommt.

Gelöst wird diese Aufgabe durch einen Haftklebstoff, wie er im Hauptanspruch niedergelegt ist. Gegenstand der Unteransprüche sind vorteilhafte Fortbildungen des Erfindungsgegenstandes. Des Weiteren umfasst die Erfindung die Verwendung dieses Haftklebstoffs.

Demgemäß betrifft die Erfindung ein haftklebriges, biologisch abbaubares, chemisches Umsetzungsprodukt aus

- zumindest einem oder mehreren aliphatischen Polyester-Polyolen mit einer Hydroxyl-Funktionalität von jeweils zwischen größer zwei und kleiner vier
- zumindest einem oder mehreren aliphatischen Polyester-Polyolen mit einer Hydroxyl-Funktionalität von jeweils zwischen kleiner oder gleich zwei und größer eins
- zumindest einem oder mehreren jeweils zweifach hydroxyl-funktionalisierten Kettenverlängerern mit einem Molekulargewicht von jeweils kleiner oder gleich 200 g/mol und
- zumindest einem oder mehreren aliphatischen Diisocyanaten,

dadurch gekennzeichnet, dass
das Verhältnis der Gesamtanzahl der Isocyanat-Gruppen zur Gesamtanzahl der Hydroxylgruppen der an der chemischen Umsetzung zum haftklebrigen, biologisch abbaubaren, chemischen Umsetzungsprodukt eingebrachten Stoffe zwischen größer oder gleich 0,4 und kleiner 1,0, bevorzugt zwischen größer oder gleich 0,6 und kleiner oder gleich 0,9 beträgt.

Unter der Hydroxyl-Funktionalität wird die Zahl der Hydroxylgruppen pro Molekül eines Polyols oder Kettenverlängerers verstanden. Sie wird in dieser Schrift im Falle eines Polyester-Polyols auf das zahlengemittelte mittlere Molekulargewicht des jeweiligen Polyester-Polyols bezogen und nach der folgenden Formel berechnet:

$$f= M_n[g/mol] \times OHZ [mmol\ OH/kg]/10^6$$

f ist die Hydroxyl-Funktionalität. $M_n$ ist das zahlengemittelte mittlere Molekulargewicht des jeweiligen Polyester-Polyols in der Einheit [g/mol] und OHZ ist die Hydroxylzahl des Polyester-Polyols in der Einheit [mmol OH / kg].

Die Hydroxylzahl ist ein Maß für den Gehalt an Hydroxylgruppen in einem Polyol.

Die Bestimmung der Hydroxylzahl erfolgt dabei nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.

Dies erfolgt nach folgender Formel:

$$OHZ [mmol\ OH/kg] = OHZ[mg\ KOH/g] \times 1000/56,1.$$

56, 1 ist dabei die Molmasse von KOH.

Unter einem aliphatischen Polyester-Polyol wird in dieser Schrift ein acyclisches oder cyclisches, gesättigtes oder ungesättigtes Polyester-Polyol verstanden, das in seiner chemischen Struktur keine aromatischen Ringe enthält.

Als Polyesterpolyole kommen alle handelsüblichen aliphatischen Polyesterpolyole in Frage. Polyester-Polyole werden im Allgemeinen durch Polykondensation aus Diolen oder Triolen oder höher funktionellen Alkoholen und Dicarbonsäuren gewonnen oder im Falle von Polycaprolacton-Polyolen durch Ringöffnungspolymerisation aus ε-Caprolacton und einem di- oder tri- oder höher funktionellem Startermolekül.

Hinsichtlich des Dicarbonsäure-Bausteins der Polyester-Polyole ist Adipinsäure bevorzugt. Bevorzugte Polyester-Polyole sind somit Polyadipat-Polyole. Ebenfalls bevorzugt sind Polycaprolacton-Polyole.

Hinsichtlich des Diol-, Triol- oder höher funktionellem Alkohol-Bausteins der Polyester-Polyole sind Ethylenglykol oder Diethylenglykol bevorzugt. Besonders bevorzugt ist mindestens eines der aliphatischen Polyester-Polyole ein Polyadipat-Polyol, welches Ethylenglykol oder Diethylenglykol als Monomerbaustein enthält.

1,4- Butandiol und 1,6-Butandiol sind ebenfalls geeignet. Auch Gemische der genannten Diole sind gut geeignet. Ebenfalls vorteilhaft sind im Polyester-Polyol enthaltene Carbonatgruppen. Im Sinne der Erzielung einer schnellen biologischen Abbaubarkeit nachteilig sind tri- und höherfunktionelle Polyester-Polyole sowie Methylgruppen tragende Polyester-Polyole, also Polyester-Polyole, die zum Beispiel 2-Methyl-1,3-Propandiol, 3-Methyl-1,5-Pentandiol oder Neopentylglykol als Alkohol-Baustein enthalten. Überraschenderweise und auch für den Fachmann nicht vorhersehbar ist das erfindungsgemäße haftklebrige, chemische Umsetzungsprodukt trotz des Einbaus entsprechender nachteiliger Polyester-Polyole, die zur Erzielung der gewünschten Haftklebeleistungen eventuell notwendig sein können, in der Kombination mit den übrigen Komponenten biologisch abbaubar.

Bevorzugte Kettenverlängerer sind 2-Methyl-1,3-Propandiol (CAS-Nr.: 2163-42-0), 3-Methyl-1,5-Pentandiol (CAS-Nr.: 4457-71-0), Ethylenglykol (CAS-Nr.: 107-21-1) oder besonders bevorzugt Diethylenglykol (CAS-Nr.: 111-46-6), Triethylenglykol (CAS-Nr.: 112-27-6) oder Tetraethylenglykol (CAS-Nr.: 112-60-7). Gut geeignet sind auch Propylenglykol, Dipropylenglykol, Tripropylenglykol, 1,3-Propandiol, 1,3-Butandiol, 1,4-Butandiol, Neopentylglykol, 1,6-Hexandiol, 2-Ethyl-1,3-hexandiol und 2-Butyl-2-Ethyl-1,3-Propandiol. Diese Aufzählung ist nicht abschließend zu verstehen. Andere bekannte Kettenverlängerer mit einem Molekulargewicht von kleiner oder gleich 200 g/mol sind vom Erfindungsgedanken nicht ausgeschlossen.

Als Diisocyanate werden aliphatische Diisocyanate verwendet. Unter aliphatischen Diisocyanaten werden in dieser Schrift acyclische oder cyclische, gesättigte oder ungesättigte Diisocyanate verstanden, die in ihrer chemischen Struktur keine aromatischen Ringe enthalten.

In einer sehr vorteilhaften Ausführungsform ist zumindest eines der aliphatischen Diisocyanate 4,4'-Diisocyanatodicylohexylmethan, abgekürzt $H_{12}$MDI (CAS-Nr.: 5124-30-1) oder Hexamethylendiisocyanat, abgekürzt HDI (CAS-Nr.: 822-06-0). Besonders bevorzugt im Hinblick auf die Schnelligkeit der biologischen Abbaubarkeit ist 4,4'-Diisocyanatodicylohexylmethan.

1-Isocyanatomethyl-3-isocyanato-1,5,5-trimethylcyclohexan (Isophorondiisocyanat) kann ebenfalls verwendet werden:

Weitere Beispiele für geeignete Diisocyanate sind:
Butan-1,4-diisocyanat, Tetramethoxybutan-1,4-diisocyanat, Ethylendiisocyanat, 2,2,4-Trimethyl-hexamethylendiisocyanat, Ethylethylendiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan und Norbonandiisocyanatomethyl.

In einer vorteilhaften Ausführungsform beträgt das Verhältnis der Gesamtanzahl der Isocyanat-Gruppen zur Gesamtanzahl der Hydroxylgruppen der an der chemischen Umsetzung zum haftklebrigen, biologisch abbaubaren, chemischen Umsetzungsprodukt eingebrachten Stoffe zwischen größer oder gleich 0,6 und kleiner oder gleich 0,9.

Weiter vorzugsweise ist das haftklebrige, biologisch abbaubare, chemische Umsetzungsprodukt ein hydroxyl-funktionalisiertes Polyurethan-Hotmelt-Prepolymer.

Gemäß einer weiteren, bevorzugten Ausführungsform des haftklebrigen, biologisch abbaubaren, chemischen Umsetzungsprodukts hat mindestens eines der aliphatischen Polyester-Polyole eine Hydroxylzahl von zwischen größer oder gleich 200 mmol OH/kg und kleiner oder gleich 2000 mmol OH/kg. Dies entspricht im Falle von Polyester-Diolen einem zahlengemittelten mittleren Molekulargewicht zwischen 1.000 und 10.000 g/mol und im Falle von Polyester-Triolen zwischen 1.500 und 15.000 g/mol.

Weiter vorzugsweise hat mindestens eines der aliphatischen Polyester-Polyole mit einer Hydroxyl-Funktionalität von zwischen größer zwei und kleiner vier eine Hydroxylzahl von zwischen größer oder gleich 200 mmol OH/kg und kleiner oder gleich 2000 mmol OH/kg.

Weiter vorzugsweise beträgt der von den aliphatischen Polyester-Polyolen mit einer Hydroxyl-Funktionalität von zwischen größer zwei und kleiner vier stammende Stoffmengenanteil an Hydroxylgruppen mindestens 2,5 %, bevorzugt mindestens 5 %, besonders bevorzugt mindestens 7,5 % aller an der zur Bildung des haftklebrigen, biologisch abbaubaren, chemischen Umsetzungsproduktes eingebrachten Hydroxylgruppen.

In einer besonders vorteilhaften Ausführungsform hat

- zumindest eines der aliphatischen Polyester-Polyole eine Hydroxyl-Funktionalität von zwischen größer zwei und kleiner vier und eine Hydroxylzahl von zwischen größer oder gleich 200 mmol OH/kg und kleiner oder gleich 2000 mmol OH/kg und

- zumindest eines der aliphatischen Polyester-Polyole eine Hydroxyl-Funktionalität von zwischen kleiner oder gleich zwei und größer eins und eine Hydroxylzahl von zwischen größer oder gleich 200 mmol OH/kg und kleiner oder gleich 8000 mmol OH/kg,

wobei der von den aliphatischen Polyester-Polyolen mit einer Hydroxyl-Funktionalität von zwischen größer zwei und kleiner vier und einer Hydroxylzahl von zwischen größer oder gleich 200 mmol OH/kg und kleiner oder gleich 2000 mmol OH/ kg stammende Stoffmengenanteil an Hydroxylgruppen zwischen einschließlich 2,5 % und einschließlich 50 %, bevorzugt zwischen einschließlich 5,0 % und einschließlich 40 %, besonders bevorzugt zwischen einschließlich 7,5 % und einschließlich 30 % aller an der zur Bildung des haftklebrigen, biologisch abbaubaren, chemischen Umsetzungsproduktes eingebrachten Hydroxylgruppen beträgt.

In einer weiteren, besonders vorteilhaften Ausführungsform hat

- zumindest eines der aliphatischen Polyester-Polyole eine Hydroxyl-Funktionalität von zwischen größer zwei und kleiner vier und eine Hydroxylzahl von zwischen größer oder gleich 200 mmol OH/kg und kleiner oder gleich 2000 mmol OH/kg und

- zumindest eines der aliphatischen Polyester-Polyole eine Hydroxyl-Funktionalität von zwischen kleiner oder gleich zwei und größer eins und eine Hydroxylzahl von zwischen größer oder gleich 200 mmol OH/kg und kleiner oder gleich 2000 mmol OH/kg,

wobei der von den aliphatischen Polyester-Polyolen mit einer Hydroxyl-Funktionalität von zwischen größer zwei und kleiner vier und einer Hydroxylzahl von zwischen größer oder gleich 200 mmol OH/kg und kleiner oder gleich 2000 mmol OH/ kg stammende Stoffmengenanteil an Hydroxylgruppen zwischen einschließlich 2,5 % und einschließlich 50 %, bevorzugt zwischen einschließlich 5,0 % und einschließlich 40 %, besonders bevorzugt zwischen einschließlich 7,5 % und einschließlich 30 % aller an der zur Bildung des haftklebrigen, biologisch abbaubaren, chemischen Umsetzungsproduktes eingebrachten Hydroxylgruppen beträgt.

Das haftklebrige, biologisch abbaubare, chemische Umsetzungsprodukt ist ein chemisch verzweigter, aber unvernetzter Haftklebstoff oder Haftstoff und kann in einer vorteilhaften Ausführungsform zum Haftklebstoff oder Haftstoff chemisch vernetzt werden.

Die chemische Vernetzung des erfindungsgemäßen haftklebrigen, biologisch abbaubaren, chemischen Umsetzungsproduktes, erfolgt vorteilhaft durch Umsetzung des haftklebrigen, biologisch abbaubaren, chemischen Umsetzungsproduktes mit einem Diisocyanat, Triisocyanat oder höher funktionellem Isocyanat oder einem Gemisch der genannten Isocyanate, wobei das Verhältnis der Gesamtanzahl aller Isocyanat-Gruppen zur Gesamtanzahl aller Hydroxylgruppen der an der chemischen Umsetzung zum haftklebrigen, biologisch abbaubaren, chemischen Umsetzungsprodukt und der anschließenden chemischen Vernetzung zum biologisch abbaubaren Haftklebstoff oder Haftstoff insgesamt eingebrachten Stoffe kleiner 1,0 beträgt, bevorzugt kleiner 0,95 beträgt, besonders bevorzugt kleiner oder gleich 0,9 beträgt.

Für den Vernetzungsschritt besonders vorteilhafte Isocyanate sind Isocyanuratringe enthaltende HDI-Trimere, zum Beispiel Desmodur® N 3300 von Bayer, das zusätzlich auch noch Pentamere, Heptamere und höher funktionelle Anteile enthält. Uretdionringe enthaltende HDI-Dimere wie zum Beispiel Desmodur® N 3400 von Bayer, das auch noch trifunktionelle Anteile enthält, sind ebenfalls geeignet. Geeignet sind auch Gemische der genannten Isocyanate sowie Gemische mit anderen Di- oder Polyisocyanaten.

Vorteilhaft für die chemische Umsetzung zum erfindungsgemäßen haftklebrigen, biologisch abbaubaren Produkt sowie auch für den Vernetzungsschritt ist die Verwendung eines bismutcarboxylat- oder bismutcarboxylatderivathaltigen Katalysators oder Katalysatorgemisches, dessen Verwendung zur Beschleunigung von Polyurethan-Reaktionen bekannt ist. Ein derartiger Katalysator steuert die Haftklebeigenschaften des Polyurethans erheblich in der Weise, dass eine oberflächenspezifische Selektivität der Haftklebeigenschaften erreicht werden kann. Beispiele für Bismutcarboxylate sind Bismuttrisdodecanoat, Bismuttrisdecanoat, Bismuttrisneodecanoat, Bismuttrisoctanoat, Bismuttrisisooctanoat, Bismuttrishexanoat, Bismuttrispentanoat, Bismuttrisbutanoat, Bismuttrispropanoat oder Bismuttrisacetat.

Es können aber auch alle anderen dem Fachmann bekannten Katalysatoren eingesetzt werden wie zum Beispiel tertiäre Amine oder Zinnorganische Verbindungen.

Weiter vorzugsweise werden die Polyole und /oder Kettenverlängerer aus erneuerbaren Rohstoffquellen wie zum Beispiel durch Fermentation von Stärke oder Zucker hergestellt.

Zur Anpassung der Eigenschaften des erfindungsgemäßen haftklebrigen, chemischen Umsetzungsproduktes kann das Polyurethan mit einem oder mehreren Additiven wie Klebrigmacher (Klebharze), Weichmacher oder/und Alterungsschutzmittel gemischt werden.

Vorzugsweise weist das Polyurethan weder Additive wie Klebrigmacher (Klebharze), Weichmacher und/oder Alterungsschutzmittel auf, insbesondere keine Klebrigmacher (Klebharze) und/oder Weichmacher.

Unter der Bezeichnung "Klebharz", englisch "Tackifier Resins", versteht der Fachmann einen Stoff auf Harzbasis, der die Klebrigkeit erhöht.

Klebrigmacher sind beispielsweise Kohlenwasserstoffharze (zum Beispiel Polymere auf Basis ungesättigter $C_5$- oder $C_9$-Monomere), Polyterpenharze auf Basis von $\alpha$-Pinen und/oder $\beta$-Pinen und/oder $\delta$-Limonen, aromatische Harze wie Cumaron-Inden-Harze oder Harze auf Basis Styrol oder $\alpha$-Methylstyrol sowie Kolophonium und seine Folgeprodukte, zum Beispiel disproportionierte, dimerisierte oder veresterte Harze, zum Beispiel Umsetzungsprodukte mit Glycol, Glycerin oder Pentaerythrit, um nur einige zu nennen. Der Zusatz von Klebrigmachern in geringfügigen Mengen bis zu 1 Gew.-% ist möglich, ohne dass die biologische Abbaubarkeit des haftklebrigen, chemischen Umsetzungsproduktes verloren geht.

Bei größeren Mengen, die dem haftklebrigen, chemischen Umsetzungsprodukt zugesetzt werden, ist es allerdings möglich, dass die biologische Abbaubarkeit des haftklebrigen, chemischen Umsetzungsproduktes nicht mehr gegeben ist.

Erfindungsgemäß wird daher auf Klebrigmacher vorteilhafterweise verzichtet.

Geeignete mischbare Weichmacher sind beispielsweise aliphatische, cycloaliphatische und aromatische Mineralöle, Polyethylen- oder Polypropylenglykol, Di- oder Poly-Ester der Phthalsäure, Citronsäure, Trimellitsäure oder Adipinsäure, flüssige Kautschuke (zum Beispiel niedermolekulare Nitril- oder Polyisoprenkautschuke), flüssige Polymerisate aus Buten und/oder Isobuten, Acrylsäureester, Polyvinylether, Flüssig- und Weichharze auf Basis der Rohstoffe von Klebharzen, Wollwachs und andere Wachse oder flüssige Silikone. Besonders bevorzugt werden Weichmacher aus nachwachsenden Rohstoffen verwendet wie zum Beispiel das biobasierte Polyoxytrimethylenglycol Cerenol® von DuPont, Pflanzenöle und vorzugsweise raffinierte Pflanzenöle wie zum Beispiel Rapsöl, Sojabohnenöl, Fettsäuren oder Fettsäureester oder epoxidierten Pflanzenölen zum Beispiel epoxidiertes Sojabohnenöl.

Insbesondere werden biologisch abbaubare Weichmacher eingesetzt, vorzugsweise Di- oder Poly-Ester der Citronsäure oder der Adipinsäure.

Weiter vorzugsweise wird der Weichmacher, insbesondere der biologisch abbaubare, in Mengen von bis 10 Gew.-% (bezogen auf die Gesamtzusammensetzung), besonders vorzugsweise in Mengen von bis 5 Gew.-% (bezogen auf die Gesamtzusammensetzung), ganz besonders vorzugsweise in Mengen von bis 2,5 Gew.-% (bezogen auf die Gesamtzusammensetzung) eingesetzt.

Wie bei den Klebrigmachern ist der Zusatz von jeglichen Weichmacher in geringfügigen Mengen bis zu 1 Gew.-% möglich, ohne dass die biologische Abbaubarkeit des haftklebrigen, chemischen Umsetzungsproduktes verloren geht.

Auch hier gilt, dass bei größeren Mengen, die dem haftklebrigen, chemischen Umsetzungsprodukt zugesetzt werden, es möglich ist, dass die biologische Abbaubarkeit des haftklebrigen, chemischen Umsetzungsproduktes nicht mehr gegeben ist. Erfindungsgemäß wird daher auf Weichmacher vorteilhafterweise verzichtet beziehungsweise vorzugsweise biologisch abbaubare Weichmacher eingesetzt.

Weitere mögliche Additive in dem haftklebrigen, chemischen Umsetzungsprodukt sind Füllstoffe (zum Beispiel Fasern, Ruß, Zinkoxid, Titandioxid, Kreide, Voll- oder Hohlglaskugeln, Mikroballons, Mikrokugeln aus anderen Materialien, Kieselsäure, Silikate, Nanopartikel), Compoundierungsmittel und/oder Alterungsschutzmittel zum Beispiel in Form von primären und sekundären Antioxidantien, beispielsweise sterisch gehinderte Phenole wie Irganox 1010 und besonders bevorzugt Tocopherol (Vitamin E). Auch Lichtschutzmittel können dem Haftklebstoff zugesetzt werden.

Bei den Additiven gilt das schon bei den Klebrigmachern und Weichmachern Gesagte: In geringfügigen Mengen bis zu 1 Gew.-% ist der Zusatz auch von biologisch nicht abbaubaren Füllstoffen möglich, ohne das die biologische Abbaubarkeit des haftklebrigen, chemischen Umsetzungsproduktes verloren geht.

Bei größeren Mengen, die dem haftklebrigen, chemischen Umsetzungsprodukt zugesetzt werden, ist es wiederum möglich, dass der Haftklebstoff biologisch nicht mehr abbaubar ist.

Erfindungsgemäß wird daher auf Füllstoffe, insbesondere auf nicht biologisch abbaubare, vorteilhafterweise verzichtet.

Biologisch abbaubare Füllstoffe hingegen können auch in größeren Mengen Verwendung finden.

Schließlich erfolgt die Herstellung des erfindungsgemäßen haftklebrigen, biologisch abbaubaren, chemischen Umsetzungsproduktes oder des chemisch vernetzten Haftklebstoffes oder Haftstoffes lösemittelfrei oder in einem organischen Lösemittel oder in einem wässrigen Medium.

Die Herstellung des erfindungsgemäßen, haftklebrigen, biologisch abbaubaren, chemischen Umsetzungsproduktes oder des chemisch vernetzten Haftklebstoffes oder Haftstoffes in Form eines Haftklebefilms zur Verwendung als Teil eines Klebebandes oder einer Adhäsionsfolie kann durch übliche, dem Fachmann bekannte Beschichtungsverfahren erfolgen. Hierbei kann das erfindungsgemäße, haftklebrige, biologisch abbaubare, chemische Umsetzungsprodukt inklusive der Additive und gegebenenfalls der vernetzenden Komponente, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen. Hierzu wird das erfindungsgemäße, haftklebrige, biologisch abbaubare, chemische Umsetzungsprodukt aus einem Extruder auf eine Trägerfolie oder Trennfolie gefördert. In dem Extruder können weitere Prozessschritte wie das Mischen mit den beschriebenen Additiven und gegebenenfalls der vernetzenden Komponente, Filtration oder eine Entgasung erfolgen. Die Schmelze wird dann vorteilhaft mittels einer Breitschlitzdüse auf die Trägerfolie oder Trennfolie beschichtet.

Aufgrund der geschilderten Vorteile wird das erfindungsgemäße, haftklebrige, biologisch abbaubare, chemische Umsetzungsprodukt oder der chemisch vernetzte Haftklebstoff oder Haftstoff, erhalten durch chemische Vernetzung des erfindungsgemäßen haftklebrigen, biologisch abbaubaren, chemischen Umsetzungsproduktes, in einem ein- oder beidseitig haftklebenden Klebeband oder in einer ein- oder beidseitig haftenden Adhäsionsfolie verwendet.

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Besonders bevorzugt werden Trägermaterialien aus nachwachsenden Rohstoffen wie Papier, Gewebe aus zum Beispiel Baumwolle, Hanf, Jurte, Brennesselfasern oder Folien aus zum Beispiel Polymilchsäure, Cellulose, modifizierter Stärke, Polyhydroxyalkanoat, biobasiertem Polypropylen, biobasiertem Polyethylen verwendet. Biologisch abbaubare Trägermaterialien sind besonders bevorzugt. Diese Aufzählung ist nicht abschließend zu verstehen, sondern im Rahmen der Erfindung ist auch die Verwendung anderer Folien möglich.

Das Trägermaterial kann vorzugsweise ein- oder beidseitig mit dem erfindungsgemäßen, haftklebrigen, biologisch abbaubaren, chemischen Umsetzungsprodukt oder dem chemisch vernetzten Haftklebstoff oder Haftstoff ausgerüstet sein.

Das Haftklebeband wird dadurch gebildet, dass auf den Träger partiell oder vollflächig das erfindungsgemäße, haftklebrige, biologisch abbaubare, chemische Umsetzungsprodukt oder der chemisch vernetzte Haftklebstoff oder Haftstoff aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann das erfindungsgemäße, haftklebrige, biologisch abbaubare, chemische Umsetzungsprodukt oder der chemisch vernetzte Haftklebstoff oder Haftstoff rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Das erfindungsgemäße, haftklebrige, biologisch abbaubare, chemische Umsetzungsprodukt oder der chemisch vernetzte Haftklebstoff oder Haftstoff kann in Kalottenform (hergestellt durch Siebdruck) vorliegen oder auch in einem anderen Muster wie Gitter, Streifen, Zickzacklinien. Ferner kann er beispielsweise auch aufgesprüht sein, was ein mehr oder weniger unregelmäßiges Auftragsbild ergibt.

Der Stoffauftrag (Beschichtungsstärke) des erfindungsgemäße, haftklebrigen, biologisch abbaubaren, chemischen Umsetzungsproduktes oder des chemisch vernetzten Haftklebstoffes oder Haftstoffes liegt vorzugsweise zwischen 10 und 200 $g/m^2$, weiter vorzugsweise zwischen 25 und 75 $g/m^2$, ganz besonders vorzugsweise zwischen 30 und 50 $g/m^2$.

Vorteilhaft ist die Verwendung eines Haftvermittlers, einer so genannten Primerschicht, zwischen Trägerfolie und dem erfindungsgemäßen, haftklebrigen, biologisch abbaubaren, chemischen Umsetzungsprodukt oder dem chemisch vernetzten Haftklebstoff oder Haftstoff oder einer physikalischen Vorbehandlung der Trägerfolienoberfläche zur Verbesserung der Haftung des erfindungsgemäßen, haftklebrigen, biologisch abbaubaren, chemischen Umsetzungsproduktes oder des chemisch vernetzten Haftklebstoffes oder Haftstoffes auf der Trägerfolie.

Als Primer sind die bekannten Dispersions- und Lösungsmittelsysteme verwendbar, zum Beispiel auf Basis von Isopren- oder Butadien haltigen Kautschuk, Acrylatkautschuk, Polyvinyl, Polyvinyliden und/oder Cyclokautschuk. Isocyanate oder Epoxharze als Additive verbessern die Haftung und erhöhen zum Teil auch die Scherfestigkeit des Haftklebstoffes. Der Haftvermittler kann ebenfalls mittels einer Coextrusionsschicht auf die Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial rück- oder oberseitig, also der Haftklebstoffseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.

Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl.

Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von $C_{14}$- bis $C_{28}$-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, geläufige Nachbehandlungen sind Kalandern, Tempern, Kaschieren, Stanzen und Eindecken.

Das Haftklebeband kann ebenfalls mit einer handelsüblichen Trennfolie laminiert sein, die üblicherweise aus einem Basismaterial aus Polyethylen, Polypropylen oder Polyester besteht, das ein- oder doppelseitig mit Polysiloxan beschichtet ist oder mit einem ein- oder doppelseitig mit Polysiloxan beschichtetem Trennpapier ausgerüstet sein.

Der allgemeine Ausdruck "Klebeband" oder "Haftklebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Das Klebeband kann in festen Längen wie zum Beispiel als Meterware oder aber als Endlosware auf Rollen (archimedische Spirale) zur Verfügung gestellt werden.

Das Klebeband kann nur aus einer Schicht Klebstoff bestehen, also einlagig sein, das Klebeband kann aber auch einen Träger aufweisen, auf den ein- oder beidseitig eine Schicht (oder gegebenenfalls mehrere Schichten) Klebstoff aufgebracht ist.

Klebkraft und Scherfestigkeit des Haftklebebandes können durch die genaue Auswahl der für die chemische Umsetzung zum erfindungsgemäßen, haftklebrigen, biologisch abbaubaren Produkt oder zum chemisch vernetzten Haftklebstoff oder Haftstoff beschriebenen Stoffe und ihrer Mengenverhältnisse innerhalb der erfindungsgemäßen Bandbreite den anwendungsspezifischen Erfordernissen angepasst und gezielt eingestellt werden. Typische Klebkräfte auf einem Stahluntergrund oder auf dem Kunststoff ABS liegen bei Rezeptierungen, die für die Zielanwendung Transportschutzfolie vorgesehen sind, zwischen 0,01 N/cm und 2,0 N/cm. Dabei wird eine Scherfestigkeit im statischen Schertest von größer 10.000 Minuten bei Raumtemperatur und einer Belastung von 1 kg erreicht. Der Haftklebstoffauftrag beträgt dabei jeweils 50 g/m$^2$ und die Verklebungsfläche beträgt jeweils 13 x 20 mm$^2$. Bei der verwendeten Trägerfolie handelt es sich dabei um eine 36 $\mu$m dicke Polyesterfolie.

Diese Werte werden auch nach einer Lagerung von 3 Wochen bei 60 °C erreicht sowie nach einer Klimawechsellagerung von 7 Zyklen, jeder Zyklus bestehend aus 8 Stunden 40 °C, 98 % relative Luftfeuchtigkeit und 16 Stunden 23 °C und 98% relative Luftfeuchtigkeit.

Die erfindungsgemäßen Haftklebebänder lassen sich sowohl kurz nach dem Verkleben als auch nach den oben genannten Temperatur- und Klimawechsellagerungen ohne Rückstände oder Beläge und ohne Verfärbungen von den genannten Untergründen Stahl und ABS abziehen.

Die Desintegration des erfindungsgemäßen, haftklebrigen, biologisch abbaubaren, chemischen Umsetzungsproduktes sowie des erfindungsgemäßen chemisch vernetzten Haftklebstoffes oder Haftstoffes in einem Handelskompost in Anlehnung an DIN EN ISO 20200 sind nach weniger als 90 Tagen Kompostierzeit gegeben. Ebenso ist ein biologischer Abbau nach DIN EN 13432 nach weniger als 6 Monaten Kompostierzeit gegeben.

Weitere Einzelheiten, Ziele, Merkmale und Vorteile der vorliegenden Erfindung werden nachfolgend anhand bevorzugter Ausführungsbeispiele näher erläutert, ohne damit in irgendeiner Weise die Erfindung einschränken zu wollen. In der Zeichnung zeigt

Fig. 1     ein einseitiges Haftklebeband,
Fig. 2     ein beidseitiges Haftklebeband,
Fig. 3     ein trägerfreies Haftklebeband (TransferKlebeband).

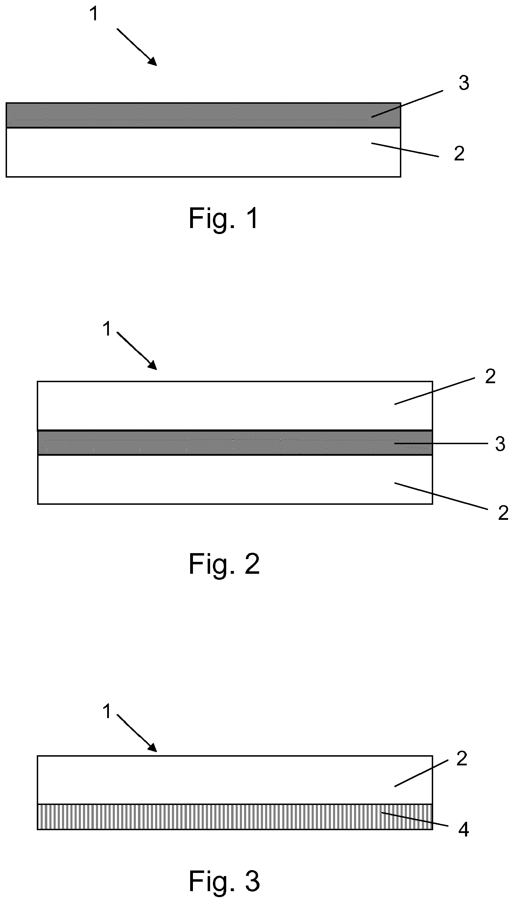

Fig. 1 zeigt ein einseitig klebendes Haftklebeband 1. Das Haftklebeband 1 weist eine Klebschicht 2 auf, die durch Beschichtung einer der zuvor beschriebenen Haftklebstoffe auf einen Träger 3 hergestellt wurde. Der Haftklebstoffauftrag beträgt bevorzugt zwischen 10 und 200 g/m$^2$.

Zusätzlich (nicht gezeigt) kann noch eine Trennfolie vorgesehen sein, die die Klebschicht 2 vor der Verwendung des Haftklebebandes 1 abdeckt und schützt. Die Trennfolie wird dann vor der Verwendung von der Klebschicht 2 entfernt.

Der in Fig. 2 dargestellte Produktaufbau zeigt ein Haftklebeband 1 mit einem Träger 3, der beidseitig mit einem Haftklebstoff beschichtet ist und somit zwei Klebschichten 2 aufweist. Der Haftklebstoffauftrag je Seite beträgt wiederum bevorzugt zwischen 10 und 200 g/m$^2$.

Auch bei dieser Ausgestaltung wird bevorzugt zumindest eine Klebschicht 2 mit einer Trennfolie abgedeckt. Bei einem aufgerollten Klebeband kann diese eine Trennfolie gegebenenfalls auch die zweite Klebschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit dem erfinderischen Haftklebstoff ausgestattet sein und auf der anderen Seite ein anderer Haftklebstoff eingesetzt werden.

Der in Fig. 3 dargestellte Produktaufbau zeigt ein Haftklebeband 1 in Form eines Transferklebebandes, das heißt, ein trägerfreies Haftklebeband 1. Hierzu wird der Haftklebstoff einseitig auf eine Trennfolie 4 beschichtet und bildet so eine Haftklebschicht 2 aus. Der Haftklebstoffauftrag beträgt hier üblicherweise zwischen 10 und 200 g/m$^2$. Gegebenenfalls wird diese Haftklebschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebstoffseite zu realisieren.

Im Folgenden soll die Erfindung anhand mehrerer Beispiele näher erläutert werden, ohne damit die Erfindung unnötig einschränken zu wollen.

Das haftklebrige, biologisch abbaubare, chemische Umsetzungsprodukt wurde jeweils hergestellt, indem zunächst die Polyester-Polyole eingewogen und in einem üblichen beheiz- und evakuierbaren Labormischer (zum Beispiel von der Firma PC Laborsystem) unter Vakuum bei einer Temperatur von 70 °C ca. zwei Stunden lang gemischt wurden. Sodann wurde der Kettenverlängerer zugegeben und 20 Minuten lang ohne Vakuum eingemischt. Anschließend wurden die restlichen Stoffe entsprechend der in den einzelnen Beispielen angegebenen Mengenverhältnisse zugefügt und 20 Minuten eingemischt. Zuletzt erfolgte die Zugabe des mindestens einen aliphatischen Diisocyanats, das 20 Minuten lang homogen eingemischt wurde. Die chemisch reagierende Mischung wurde zur Vervollständigung der Umsetzung 7 Tage lang bei 40 °C im Wärmeschrank gelagert. Die Mengenverhältnisse der für die chemische Umsetzung eingebrachten Stoffe wurden so gewählt, dass die für eine anschließende Vernetzung vorgesehenen hydroxyl-funktionalisierten Polyurethan-Prepolymere stets in einem NCO/OH-Verhältnis von 0,7 hergestellt wurden. Weitere haftklebrige, biologisch abbaubare, chemische Umsetzungsprodukte wurden in einem NCO/OH-Verhältnis von 0,9 hergestellt. Unter dem NCO/OH-Verhältnis ist das Verhältnis der Gesamtanzahl der für die chemische Umsetzung eingebrachten Isocyanat-Gruppen zur Gesamtanzahl der für die chemische Umsetzung eingebrachten Hydroxylgruppen gemeint.

Die Vernetzung erfolgte, indem das hergestellte hydroxyl-funktionalisierte Polyurethan-Prepolymer zunächst in Aceton gelöst wurde. 100 g Prepolymer wurden stets 25 g Aceton zugefügt. Es wurde entweder mit Desmodur® N3300 oder Desmodur® N3400 vernetzt. Es wurde stets soweit vernetzt, dass das Gesamt-NCO/OH-Verhältnis stets entweder 0,8 oder 0,9 betrug. Mit dem Gesamt-NCO/OH-Verhältnis ist das Verhältnis der Gesamtanzahl aller Isocyanat-Gruppen zur Gesamtanzahl aller Hydroxylgruppen gemeint, die zur chemischen Umsetzung zum haftklebrigen, biologisch abbaubaren Produkt und der anschließenden chemischen Vernetzung zum biologisch abbaubaren Haftklebstoff oder Haftstoff insgesamt eingebracht wurden.

Nach der Zugabe des Desmodur® N3300 oder des Desmodur® N3400 zum in Aceton gelösten hydroxyl-funktionalisierten Polyurethan-Prepolymer wurde die Mischung 5 Minuten gerührt. Anschließend wurde die sodann chemisch reagierende Mischung während der Reaktionsphase mit Hilfe eines handelsüblichen Laborstreichtisches (zum Beispiel von der Firma SMO (Sondermaschinen Oschersleben GmbH)) mit Hilfe eines Streichmessers auf eine 36 μm dicke PET-Folie und in einem zweiten Versuch auf eine silikonisierte PET-Folie beschichtet. Das Aceton wurde bei 60 °C im Umlufttrockenschrank 10 Minuten abgedampft. Die Spaltbreite beim Beschichten wurde so eingestellt, dass nach dem Abdampfen des Lösemittels ein 50 μm dicker haftklebriger Film erhalten wurde. Anschließend wurden die vom Lösemittel befreiten Filme mit silikonisierter PET-Folie abgedeckt und zur Vervollständigung der Umsetzung 7 Tage lang bei 40 °C im Wärmeschrank gelagert.

In Tabelle 1 sind die zur Herstellung der erfindungsgemäßen, haftklebrigen, biologisch abbaubaren, chemischen Umsetzungsprodukte sowie der chemisch vernetzten Haftklebstoffe oder Haftstoffe verwendeten Stoffe aufgeführt, und zwar jeweils mit Handelsnamen und Hersteller. Die genannten Rohstoffe sind alle frei im Handel erhältlich.

| Handelsname | Chemische Bezeichnung/ Beschreibung | Mittleres zahlen-gemitteltes Molekular-gewicht $M_n$ | OH- bzw. NCO-Zahl (mmol OH/kg bzw. mmol NCO/kg | Funktio-nalität (f) | Hersteller/ Lieferant |
|---|---|---|---|---|---|
| Polyester-Diole | | | | | |
| Capa 2043 ® | Polycaprolacton-Diol, Basis: 1,4-Butandiol (Starter), Caprolacton | 400 | 4991 | 2 | Perstorp |
| Capa 2077A ® | Polycaprolacton-Diol, Basis: 1,6-Hexandiol (Starter), Caprolacton | 750 | 2674 | 2 | Perstorp |
| Desmophen 1652 ® | Polyester-Diol auf Basis 1,4-Butandiol, Ethylenglykol, Diethylenglykol, Adipinsäure | 2120 | 941 | 2 | Bayer |
| Polyester-Triole | | | | | |
| Bester 10 ® | Polyester-Triol auf Basis Diethylenglykol, Trimethylolpropan, Adipinsäure | 2760 | 1069 | 3 | Dow Chemical |
| Kettenverlängerer | | | | | |
| MP Diol ® | 2-Methyl-1,3-Propandiol (CAS-Nr.: 2163-42-0) | 90,12 | 22193 | 2 | Lyondel |
| MPD ® | 3-Methyl-1,5-pentandiol (CAS-Nr.: 4457-71-0) | 118,17 | 16925 | 2 | Kuraray |
| Diethylenglykol | Diethylenglykol (CAS-Nr.: 111-46-6) | 150,17 | 18846 | 2 | Sigma-Aldrich |
| Katalysator | | | | | |
| Coscat 83 ® | Bismuttrisneodecanoat, CAS-Nr.: 34364-26-6 | | | | Caschem |
| Isocyanate | | | | | |
| Desmodur W ® | 4,4'-Diisocyanatodicylohexylmethan (CAS-Nr.: 5124-30-1) | 262 | 7571 | 2 | Bayer |
| Hexamethylen-diisocyanat | Hexamethylendiisocyanat (CAS-Nr.: 822-06-0) | 168 | 11891 | 2 | Sigma-Aldrich |
| Desmodur N 3300 ® | HDI-Trimer mit höher funktionellen Anteilen | ca. 680 | 5190 | ca. 3,4 | Bayer |
| Desmodur N 3400 ® | HDI-Dimer mit höher funktionellen Anteilen | ca. 480 | 5190 | ca. 2,5 | Bayer |

Tabelle 1: Zur Herstellung der beispielhaften, erfindungsgemäßen Muster verwendete Basismaterialien

Prüfmethoden

Die Messungen werden, wenn nicht anders angegeben, bei einem Prüfklima von 23 ± 1 °C und 50 ± 5 % rel. Luftfeuchte durchgeführt.
Die folgenden Prüfmethoden wurden eingesetzt, um die Ausgangsstoffe sowie die nach den beschriebenen Verfahren hergestellten Muster kurz zu charakterisieren.

Molekulargewicht $M_n$

Die Bestimmungen der zahlengemittelten mittleren Molekulargewichte $M_n$ erfolgten mittels Gelpermeations-chromatographie (GPC). Als Eluent wurde THF (Tetrahydrofuran) mit 0,1 Vol.-% Trifluoressigsäure eingesetzt. Die Messungen erfolgten bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

Hydroxylzahl

Die Bestimmung der Hydroxylzahlen erfolgte nach DIN 53240. Nach dieser Methode wird die Hydroxylzahl (OHZ) in der Einheit [mg KOH/g] angegeben. Zum Zwecke der Vereinfachung der Rezepturberechnungen in den aufgeführten Beispielen wurden die Hydroxylzahlen in die Einheit [mmol OH/kg] umgerechnet.
Dies erfolgte nach folgender Formel:

$$OHZ \text{ [mmol OH/kg]} = OHZ\text{[mg KOH/g]} \times 1000/56{,}1$$

56, 1 ist dabei die Molmasse von KOH.

Hydroxyl-Funktionalität (f)

Die Hydroxyl-Funktionalität (f) wurde aus dem zahlengemittelten, mittleren Molekulargewicht $M_n$ und der OH-Zahl (OHZ) nach folgender Gleichung errechnet:

$$f = M_n\text{[g/mol]} \times OHZ \text{ [mmol OH/kg]}/10^6$$

Klebkraft

Die Prüfung der Klebkraft (Schälfestigkeit) erfolgte in Anlehnung an PSTC-1. Ein 2 cm breiter Streifen des Haftklebbandes, bestehend aus der 36 μm dicken PET-Folie und dem darauf aufgetragenen 50 μm dicken haftklebrigen Film wird auf der Prüfplatte durch fünfmaliges doppeltes Überrollen mittels einer 5 kg Rolle verklebt. Die Prüfplatte wird eingespannt, und der Selbstklebstreifen über sein freies Ende mittels einer Zugprüfmaschine unter einem Schälwinkel von 180° mit einer Geschwindigkeit von 300 mm/min abgezogen. Die dafür notwendige Kraft wird ermittelt. Die Messergebnisse werden über drei Messungen gemittelt und normiert auf die Breite des Streifens in N/cm angegeben.
Bei den Prüfplatten handelte es sich um Stahl- und ABS-Platten.
Die Klebkraftmessungen erfolgten mit frisch verklebten Proben und mit Proben, die nach Durchführung der Verklebungen in einer Klimakammer gelagert wurden. Die Lagerbedingungen waren in einer ersten Versuchsserie 3 Wochen bei 60 °C. In einer zweiten Versuchsserie erfolgte eine Klimawechsellagerung von 7 Zyklen mit jeweils 8 Stunden bei 40 °C/ 98 % relative Luftfeuchtigkeit und 16 Stunden bei 23 °C / 98 % relative Luftfeuchtigkeit.

Schertest

Der Schertest erfolgte nach der Prüfvorschrift PSTC-107. Nach dieser Methode wird der Verbund aus Haftklebstoffschicht und Polyesterfolie auf den Haftgrund (Stahl) aufgebracht, viermal mit einem 2kg-Gewicht aufgedrückt und anschließend einer konstanten Scherbelastung ausgesetzt. Ermittelt wird die Haltedauer in Minuten (Scherstandzeit).
Die Verklebungsfläche betrug jeweils 13 x 20 mm². Die Scherbelastung dieser Verklebungsfläche betrug 1 kg.

Bestimmung der biologischen Abbaubarkeit

Die biologische Abbaubarkeit durch Kompostierung wurde nach DIN EN 13432 bestimmt Dabei handelt es sich um eine chemische Prüfung, bei der innerhalb der sechs monatigen Prüfdauer ein Abbaugrad von 90 % relativ zu einer Referenzsubstanz in Gegenwart von Mikroorganismen oder Pilzen erreicht werden muss. Dabei sind die Bedingungen (Temperatur, Sauerstoff- und Feuchtigkeitsgehalt) genau definiert. Der Abbau muss zu Wasser, Kohlenstoffdioxid und Biomasse erfolgen. Es folgt eine chemische Untersuchung und Bewertung der Qualität des Komposts.
Ebenfalls erfolgt im Rahmen dieser Untersuchung eine Prüfung auf das Desintegrationsverhaltens. Die Desintegration weist auf die physikalische Zerlegung eines Materials in sehr kleine Fragmente hin. Dabei müssen mindestens 90 % des Kunststoffs innerhalb von 12 Wochen zu Partikeln kleiner als 2 mm abgebaut sein. Nur wenn beide Tests erfüllt sind gilt ein Stoff nach der DIN-Norm als biologisch abbaubar. Wegen des hohen Aufwandes und der daraus resultierenden hohen Kosten erfolgte diese Prüfung nur an einigen ausgewählten Beispielen.

Bestimmung des Desintegrationsverhaltens

Bei allen Prüfmustern erfolgte separat die Prüfung des Desintegrationsverhaltens in Anlehnung an DIN EN ISO 20200.

Diese Norm beschreibt die Bestimmung der Desintegrierbarkeit (des Zersetzungsgrades) von Polymeren unter nachgebildeten Kompostierungsbedingungen im Labormaßstab.

Für die Untersuchungen wurde handelsübliche Komposterde verwendet, hier die Komposterde mit der Markenbezeichnung tangocomp® der VKN-Vertriebsgesellschaft Kompostprodukte Nord mbH. Die Vertriebsgesellschaft ist in Tangstedt. Schleswig-Holstein ansässig und bezieht ihre Kompostrohstoffe aus der Umgebung von Hamburg. Der Feuchtegehalt der Komposterde wurde auf 55 bis 60 % eingestellt. Zur Bestimmung des Feuchtegehaltes wurden drei Proben Komposterde ä 10 g für 2 Stunden bei 120 °C getrocknet und anschließend der Feuchtigkeitsverlust und somit der Wassergehalt der Erde bestimmt. Fehlende Feuchtigkeit wurde in Form von nicht gechlortem Leitungswasser aufgefüllt.

In einen 250 mL PE-Becher wurden zunächst 50 g der auf einen Feuchtegehalt von 60 % eingestellten Komposterde eingewogen. Auf diese erste Erdschicht wurde anschließend ein ca. 9 cm² großes Stück der zu untersuchenden Probe gegeben. Auf die Probe wurde sodann eine zweite Schicht Komposterde von ebenfalls 50 g Gewicht gegeben. Der PE Becher wurde mit einem Deckel verschlossen. Zur Belüftung des Komposts wurde der Deckel zuvor mit 3 Löchern mit einem Durchmesser von jeweils 2,0 mm versehen. Die so vorbereitete Probe wurde bei 58 ± 2 °C für maximal 90 Tage gelagert und der Wasserverlust alle 2 bis 3 Tage durch Wasserzugabe ausgeglichen. Einmal wöchentlich wurde der Fortschritt der Zersetzung der Proben durch optische Prüfung festgestellt und die Zeit bis zur kompletten Zersetzung (Desintegrationszeit) dokumentiert.

Im Folgenden wird die Erfindung durch einige Beispiele näher erläutert, ohne die Erfindung damit einschränken zu wollen.

**Beispiele**

**Beispiel 1**

Das erfindungsgemäße haftklebrige, biologisch abbaubare, chemische Umsetzungsprodukt (Prepolymer 1) setzt sich wie folgt zusammen:

**Prepolymer 1:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 58,8 | 55,3 mmol OH |
| MP Diol ® | 2,5 | 55,3 mmol OH |
| Bester 10 ® | 25,8 | 27,7 mmol OH |
| Coscat 83 ® | 0,1 | |
| Desmodur W ® | 12,8 | 96,8 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 1a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 1 | 100,0 | 138,3 mmol OH<br>96,8 mmol NCO |
| Aceton | 25,0 | |
| Desmodur N 3300 ® | 2,7 | 13,8 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300®/Prepolymer 1 somit: 13,8/(138,3-96,8) = 0,33.

**Beispiel 1b:**

| Rohstoff | Gewichtsanteil [g] | Anzahl der OH- beziehungsweise NCO-Gruppen, bezogen auf den Gewichtsanteil |
|---|---|---|
| Prepolymer 1 | 100,0 | 138,3 mmol OH<br>96,8 mmol NCO |
| Aceton | 25,0 | |
| Desmodur N 3300 ® | 5,3 | 27,7 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 1 somit: 27,7/(138,3-96,8) = 0,67.

**Beispiel 2**

Das erfindungsgemäße haftklebrige, biologisch abbaubare, chemische Umsetzungsprodukt (Prepolymer 2) setzt sich wie folgt zusammen:

**Prepolymer 2:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 51,3 | 48,3 mmol OH |
| MP Diol ® | 3,6 | 80,5 mmol OH |
| Bester 10 ® | 30,1 | 32,2 mmol OH |
| Coscat 83 ® | 0,1 | |
| Desmodur W ® | 14,9 | 112,6 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 2a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 2 | 100,0 | 161,0 mmol OH<br>112,6 mmol NCO |
| Aceton | 25,0 | |
| Desmodur N 3300 ® | 3,1 | 16,1 mmol NCO |

Der Gewichtsanteil an Desmodur N 3300 ® ist so berechnet, dass das Gesamt-NCO/OH-Verhältnis 0,8 beträgt.

Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 2 somit: 16,1/(161,0-112,6) = 0,33.

**Beispiel 2b:**

| Rohstoff | Gewichtsanteil [g] | Anzahl der OH- beziehungsweise NCO-Gruppen, bezogen auf den Gewichtsanteil |
|---|---|---|
| Prepolymer 2 | 100,0 | 161,0 mmol OH<br>112,6 mmol NCO |
| Aceton | 25,0 | |
| Desmodur N 3300 ® | 6,2 | 32,2 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 2 somit: 32,2/(161,0-112,6) = 0,67.

**Beispiel 3**

Das erfindungsgemäße haftklebrige, biologisch abbaubare, chemische Umsetzungsprodukt (Prepolymer 3) setzt sich wie folgt zusammen:

**Prepolymer 3:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 40,9 | 38,5 mmol OH |
| MP Diol ® | 5,2 | 115,5 mmol OH |
| Bester 10 ® | 36,0 | 38,5 mmol OH |
| Coscat 83 ® | 0,1 | |
| Desmodur W ® | 17,8 | 134,7 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 3a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 3 | 100,0 | 192,5 mmol OH<br>134,7 mmol NCO |
| Aceton | 25,0 | |
| Desmodur N 3300 ® | 3,7 | 19,2 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 3 somit: 19,2/(192,5-134,7) = 0,33.

**Beispiel 3b:**

| Rohstoff | Gewichtsanteil [g] | Anzahl der OH- beziehungsweise NCO-Gruppen, bezogen auf den Gewichtsanteil |
|---|---|---|
| Prepolymer 3 | 100,0 | 192,5 mmol OH<br>134,7 mmol NCO |
| Aceton | 25,0 | |
| Desmodur N 3300 ® | 7,4 | 38,5 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 3 somit: 38,5/(192,5-134,7) = 0,67.

**Beispiel 4**

Das erfindungsgemäße haftklebrige, biologisch abbaubare, chemische Umsetzungsprodukt (Prepolymer 4) setzt sich wie folgt zusammen:

**Prepolymer 4:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 69,7 | 65,7 mmol OH |
| MP Diol ® | 3,0 | 65,7 mmol OH |
| Bester 10 ® | 13,7 | 14,6 mmol OH |
| Coscat 83 ® | 0,1 | |
| Desmodur W ® | 13,5 | 102,2 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 4a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 4 | 100,0 | 146,0 mmol OH<br>102,2 mmol NCO |
| Aceton | 25,0 | |
| Desmodur N 3300 ® | 2,8 | 14,6 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 4 somit: 14,6/(146,0-102,2) = 0,33.

**Beispiel 4b:**

| Rohstoff | Gewichtsanteil [g] | Anzahl der OH- beziehungsweise NCO-Gruppen, bezogen auf den Gewichtsanteil |
|---|---|---|
| Prepolymer 4 | 100,0 | 146,0 mmol OH<br>102,2 mmol NCO |
| Aceton | 25,0 | |
| Desmodur N 3300 ® | 5,6 | 29,2 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 4 somit: 29,2/(146,0-102,2) = 0,67.

**Beispiel 5**

Das erfindungsgemäße haftklebrige, biologisch abbaubare, chemische Umsetzungsprodukt (Prepolymer 5) setzt sich wie folgt zusammen:

**Prepolymer 5:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 69,2 | 65,1 mmol OH |
| MPD ® | 3,8 | 65,1 mmol OH |
| Bester 10 ® | 13,5 | 14,5 mmol OH |
| Coscat 83 ® | 0,1 | |
| Desmodur W ® | 13,4 | 101,2 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 5a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 5 | 100,0 | 144,7 mmol OH<br>101,2 mmol NCO |
| Aceton | 25,0 | |
| Desmodur N 3300 ® | 2,8 | 14,5 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 5 somit: 14,5/(144,6-101,2) = 0,33.

**Beispiel 5b:**

| Rohstoff | Gewichtsanteil [g] | Anzahl der OH- beziehungsweise NCO-Gruppen, bezogen auf den Gewichtsanteil |
|---|---|---|
| Prepolymer 5 | 100,0 | 144,7 mmol OH<br>101,2 mmol NCO |
| Aceton | 25,0 | |
| Desmodur N 3300 ® | 5,6 | 28,9 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 5 somit: 28,9/(144,6-101,2) = 0,67.

**Beispiel 6**

Das erfindungsgemäße haftklebrige, biologisch abbaubare, chemische Umsetzungsprodukt (Prepolymer 6) setzt sich wie folgt zusammen:

**Prepolymer 6:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 58,5 | 55,1 mmol OH |
| Diethylenglykol | 2,9 | 55,1 mmol OH |
| Bester 10 ® | 25,8 | 27,5 mmol OH |
| Coscat 83 ® | 0,1 | |
| Desmodur W ® | 12,7 | 96,3 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 6a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 6 | 100,0 | 137,7 mmol OH<br>96,3 mmol NCO |
| Aceton | 25,0 | |
| Desmodur N 3300 ® | 2,7 | 13,8 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 6 somit: 13,8/(137,7-96,3) = 0,33.

**Beispiel 6b:**

| Rohstoff | Gewichtsanteil [g] | Anzahl der OH- beziehungsweise NCO-Gruppen, bezogen auf den Gewichtsanteil |
|---|---|---|
| Prepolymer 6 | 100,0 | 137,7 mmol OH<br>96,3 mmol NCO |
| Aceton | 25,0 | |
| Desmodur N 3300 ® | 5,3 | 27,5 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 6 somit: 27,5/(137,7-96,3) = 0,67.

**Beispiel 7**

Das erfindungsgemäße haftklebrige, biologisch abbaubare, chemische Umsetzungsprodukt (Prepolymer 7) setzt sich wie folgt zusammen:

**Prepolymer 7:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Capa 2043 ® | 30,0 | 149,8 mmol OH |
| Diethylenglykol | 8,0 | 149,8 mmol OH |
| Bester 10 ® | 31,2 | 33,3 mmol OH |
| Coscat 83 ® | 0,1 | |
| Desmodur W ® | 30,7 | 233,1 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 7a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 7 | 100,0 | 333,0 mmol OH<br>233,1 mmol NCO |
| Aceton | 25,0 | |
| Desmodur N 3300 ® | 6,4 | 33,3 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 7 somit: 33,3/(333,0-233,1) = 0,33.

**Beispiel 7b:**

| Rohstoff | Gewichtsanteil [g] | Anzahl der OH- beziehungsweise NCO-Gruppen, bezogen auf den Gewichtsanteil |
|---|---|---|
| Prepolymer 7 | 100,0 | 333,0 mmol OH<br>233,1 mmol NCO |
| Aceton | 25,0 | |
| Desmodur N 3300 ® | 12,8 | 66,6 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 7 somit: 66,6/(333,0-233,1) = 0,67.

**Beispiel 8**

Das erfindungsgemäße haftklebrige, biologisch abbaubare, chemische Umsetzungsprodukt (Prepolymer 8) setzt sich wie folgt zusammen:

**Prepolymer 8:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Capa 2077A ® | 48,8 | 130,5 mmol OH |
| Diethylenglykol | 6,9 | 130,5 mmol OH |
| Bester 10 ® | 27,1 | 29,0 mmol OH |
| Coscat 83 ® | 0,1 | |
| Hexamethylendiisocyanat | 17,1 | 202,9 mmol NCO |
| Summe | 100,0 | |

Der Gewichtsanteil an Hexamethylendiisocyanat ist dabei so berechnet, dass das NCO / OH - Verhältnis des Prepolymers 0,7 beträgt.

**Vernetzungsschritt:**

**Beispiel 8a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 8 | 100,0 | 289,9 mmol OH<br>202,9 mmol NCO |
| Aceton | 25,0 | |
| Desmodur N 3300 ® | 5,6 | 29,0 mmol NCO |

Der Gewichtsanteil an Desmodur N 3300 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 8 somit: 29,0/(289,9-202,9) = 0,33.

**Beispiel 8b:**

| Rohstoff | Gewichtsanteil [g] | Anzahl der OH- beziehungsweise NCO-Gruppen, bezogen auf den Gewichtsanteil |
|---|---|---|
| Prepolymer 8 | 100,0 | 289,9 mmol OH 202,9 mmol NCO |
| Aceton | 25,0 | |
| Desmodur N 3300 ® | 11,2 | 58,0 mmol NCO |

Der Gewichtsanteil an Desmodur N 3300 ® ist so berechnet, dass das Gesamt-NCO/OH-Verhältnis 0,9 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3300 ®/Prepolymer 8 somit: 58,0/(289,9-202,9) = 0,67.

**Beispiel 9**

Das erfindungsgemäße haftklebrige, biologisch abbaubare, chemische Umsetzungsprodukt (Polymer 9) setzt sich wie folgt zusammen:

**Polymer 9:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 66,9 | 62,9 mmol OH |
| Diethylenglykol | 3,3 | 62,9 mmol OH |
| Bester 10 ® | 13,1 | 14,0 mmol OH |
| Coscat 83 ® | 0,1 | |
| Desmodur W ® | 16,6 | 125,8 mmol NCO |
| Summe | 100,0 | |

Der Gewichtsanteil an Desmodur W ist dabei so berechnet, dass das NCO / OH - Verhältnis des Polymers 0,9 beträgt. Es erfolgte keine weitere Vernetzung.

**Beispiel 10**

Das erfindungsgemäße haftklebrige, biologisch abbaubare, chemische Umsetzungsprodukt (Prepolymer 10) setzt sich wie folgt zusammen:

**Prepolymer 10:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Desmophen 1652 ® | 58,8 | 55,3 mmol OH |
| MP Diol ® | 2,5 | 55,3 mmol OH |
| Bester 10 ® | 25,8 | 27,7 mmol OH |
| Coscat 83 ® | 0,1 | |
| Desmodur W ® | 12,8 | 96,8 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 10a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 10 | 100,0 | 138,3 mmol OH<br>96,8 mmol NCO |
| Aceton | 25,0 | |
| Desmodur N 3400 ® | 2,7 | 13,8 mmol NCO |

Der Gewichtsanteil an Desmodur N 3400 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3400 ®/Prepolymer 10 somit: 13,8/(138,3-96,8) = 0,33.

**Beispiel 11**

Das erfindungsgemäße haftklebrige, biologisch abbaubare, chemische Umsetzungsprodukt (Prepolymer 11) setzt sich wie folgt zusammen:

**Prepolymer 11:**

| Rohstoff | Gewichtsanteil [Gew.-%] | Anzahl der eingebrachten OH- beziehungsweise NCO-Gruppen, bezogen auf den prozentualen Gewichtsanteil |
|---|---|---|
| Capa 2043 ® | 29,7 | 148,5 mmol OH |
| MPD ® | 8,8 | 148,5 mmol OH |
| Bester 10 ® | 30,9 | 33,0 mmol OH |
| Coscat 83 ® | 0,1 | |
| Desmodur W ® | 30,5 | 231,0 mmol NCO |
| Summe | 100,0 | |

Der Gewichtsanteil an Desmodur W ist dabei so berechnet, dass das NCO / OH - Verhältnis des Prepolymers 0,7 beträgt.

**Vernetzungsschritt:**

**Beispiel 11a:**

| Rohstoff | Gewichtsanteil [g] | Anzahl der eingebrachten OH- beziehungsweise NCO-Gruppen, bezogen auf den Gewichtsanteil |
|---|---|---|
| Prepolymer 11 | 100,0 | 330,0 mmol OH<br>231,0 mmol NCO |
| Aceton | 25,0 | |
| Desmodur N 3400 ® | 6,4 | 33,0 mmol NCO |

Der Gewichtsanteil an Desmodur N 3400 ® ist so berechnet, dass das Gesamt-NCO/OH-Verhältnis 0,8 beträgt. Da die in das Prepolymer eingebrachten NCO-Gruppen zum Zeitpunkt der Durchführung des Vernetzungsschrittes bereits als vollständig umgesetzt angenommen werden, beträgt das NCO/OH-Verhältnis Desmodur N 3400 ®/Prepolymer 11 somit: 33,0/(330,0-231,0) = 0,33.

**Ergebnisse**

| Beispiel/ Probe | Klebkraft (Stahl) [N/cm] | Klebkraft (ABS) [N/cm] | Scherstandzeit (Stahl) [Minuten] | Klebkraft (Stahl) nach 3 Wochen 60 °C-Lagerung [N/cm] | Klebkraft (ABS) nach 3 Wochen 60 °C-Lagerung [N/cm] | Klebkraft (Stahl) nach 7 Zyklen Klimawechsellagerung [N/cm] | Klebkraft (ABS) nach 7 Zyklen Klimawechsellagerung [N/cm] | Biologische Abbaubarkeit nach DIN EN 13432 | Desintegrationszeit [Tage] |
|---|---|---|---|---|---|---|---|---|---|
| 1a | 2,8 | 4,0 | 170 | 3,0 | 4,2 | 2,2 | 3,6 | erfüllt | < 70 |
| 1b | 0,3 | 1,3 | >10.000 | 0,4 | 1,2 | 0,3 | 1,1 | erfüllt | < 84 |
| 2a | 3,2 | 3,5 | >10.000 | 3,3 | 3,1 | 3,0 | 3,9 | erfüllt | < 63 |
| 2b | 0,4 | 0,3 | >10.000 | 0,4 | 0,4 | 0,3 | 0,2 | erfüllt | < 77 |
| 3a | 4,3 | 3,3 | >10.000 | 4,8 | 3,3 | 4,1 | 3,1 | n.b. | < 77 |
| 3b | 1,3 | 1,6 | >10.000 | 1,2 | 1,7 | 1,9 | 1,9 | n.b. | < 84 |
| 4a | 3,9 | 3,2 | 4200 | 3,4 | 3,0 | 3,3 | 3,7 | n.b. | < 77 |
| 4b | 1,9 | 1,9 | >10.000 | 2,6 | 2,0 | 2,0 | 2,3 | n.b. | < 84 |
| 5a | 2,3 | 2,2 | 3500 | 2,5 | 2,6 | 2,6 | 2,1 | erfüllt | < 63 |
| 5b | 1,4 | 1,7 | >10.000 | 1,3 | 1,6 | 1,5 | 1,7 | erfüllt | < 77 |
| 6a | 3,0 | 2,8 | 5300 | 3,3 | 2,9 | 3,1 | 2,9 | n.b. | < 56 |
| 6b | 0,9 | 1,2 | >10.000 | 1,3 | 1,0 | 0,7 | 1,0 | n.b. | < 63 |
| 7a | 8,8 | 3,6 | 280 | 9,5 | 3,5 | 7,4 | 3,9 | n.b. | < 49 |
| 7b | 4,1 | 2,8 | 8500 | 3,8 | 2,2 | 3,6 | 2,9 | n.b. | < 63 |
| 8a | 7,6 | 4,3 | 730 | 8,2 | 4,0 | 7,0 | 4,0 | n.b. | < 56 |
| 8b | 3,0 | 2,6 | >10.000 | 3,3 | 2,9 | 2,5 | 2,2 | n.b. | < 70 |
| 9 | 3,2 | 2,5 | 1500 | 4,2 | 2,6 | 3,3 | 2,0 | erfüllt | < 77 |
| 10a | 3,7 | 4,6 | 900 | 5,0 | 4,1 | 3,7 | 4,1 | n.b. | < 63 |
| 11a | 7,8 | 6,2 | 450 | 7,3 | 6,7 | 7,2 | 5,3 | n.b. | < 70 |
| n.b.= nicht bestimmt | | | | | | | | | |

Bei allen Klebkraftmessungen waren die Bruchbilder stets adhäsiv. Es wurden keine Beläge und keine Verfärbungen auf den Prüfplatten beobachtet. Bei einigen der im Klimawechsel gelagerten Muster mit geringerer Scherfestigkeit als 10.000 Minuten waren auf den Prüfplatten nach dem Abziehen des Klebebandes geringe Rückstände im Kantenbereich des Klebebandes zu beobachten.

**Patentansprüche**

1.  Haftklebriges, biologisch abbaubares, chemisches Umsetzungsprodukt aus

    • zumindest einem oder mehreren aliphatischen Polyester-Polyolen mit einer Hydroxyl-Funktionalität von jeweils zwischen größer zwei und kleiner vier
    • zumindest einem oder mehreren aliphatischen Polyester-Polyolen mit einer Hydroxyl-Funktionalität von jeweils zwischen kleiner oder gleich zwei und größer eins
    • zumindest einem oder mehreren jeweils zweifach hydroxyl-funktionalisierten Kettenverlängerern mit einem Molekulargewicht von jeweils kleiner oder gleich 200 g/mol und
    • zumindest einem oder mehreren aliphatischen Diisocyanaten,

    **dadurch gekennzeichnet, dass**
    das Verhältnis der Gesamtanzahl der Isocyanat-Gruppen zur Gesamtanzahl der Hydroxylgruppen der an der chemischen Umsetzung zum haftklebrigen, biologisch abbaubaren, chemischen Umsetzungsprodukt eingebrachten Stoffe zwischen größer oder gleich 0,4 und kleiner 1,0, bevorzugt zwischen größer oder gleich 0,6 und kleiner oder gleich 0,9 beträgt.

2.  Haftklebriges, biologisch abbaubares, chemisches Umsetzungsprodukt nach Anspruch 1,
    **dadurch gekennzeichnet, dass**
    das haftklebrige, biologisch abbaubare, chemische Umsetzungsprodukt ein hydroxyl-funktionalisiertes Polyurethan-Hotmelt-Prepolymer ist.

3.  Haftklebriges, biologisch abbaubares, chemisches Umsetzungsprodukt nach zumindest einem der vorangegangen Ansprüche,
    **dadurch gekennzeichnet, dass**
    mindestens eines der aliphatischen Polyester-Polyole eine Hydroxylzahl von zwischen größer oder gleich 200 mmol OH/kg und kleiner oder gleich 2000 mmol OH/kg hat.

4.  Haftklebriges, biologisch abbaubares, chemisches Umsetzungsprodukt nach zumindest einem der vorangegangen Ansprüche,
    **dadurch gekennzeichnet, dass**
    mindestens eines der aliphatischen Polyester-Polyole mit einer Hydroxyl-Funktionalität von zwischen größer zwei und kleiner vier eine Hydroxylzahl von zwischen größer oder gleich 200 mmol OH/kg und kleiner oder gleich 2000 mmol OH/kg hat.

5.  Haftklebriges, biologisch abbaubares, chemisches Umsetzungsprodukt nach zumindest einem der vorangegangen Ansprüche,
    **dadurch gekennzeichnet, dass**
    der von den aliphatischen Polyester-Polyolen mit einer Hydroxyl-Funktionalität von zwischen größer zwei und kleiner vier stammende Stoffmengenanteil an Hydroxylgruppen mindestens 2,5 %, bevorzugt mindestens 5 %, besonders bevorzugt mindestens 7,5 % aller an der zur Bildung des haftklebrigen, biologisch abbaubaren, chemischen Umsetzungsproduktes eingebrachten Hydroxylgruppen beträgt.

6.  Haftklebriges, biologisch abbaubares, chemisches Umsetzungsprodukt nach zumindest einem der vorangegangenen Ansprüche,
    **dadurch gekennzeichnet, dass**

    • zumindest eines der aliphatischen Polyester-Polyole eine Hydroxyl-Funktionalität von zwischen größer zwei und kleiner vier und eine Hydroxylzahl von zwischen größer oder gleich 200 mmol OH/kg und kleiner oder gleich 2000 mmol OH/kg hat und
    • zumindest eines der aliphatischen Polyester-Polyole eine Hydroxyl-Funktionalität von zwischen kleiner oder gleich zwei und größer eins und eine Hydroxylzahl von zwischen größer oder gleich 200 mmol OH/kg und kleiner oder gleich 8000 mmol OH/kg hat,

wobei der von den aliphatischen Polyester-Polyolen mit einer Hydroxyl-Funktionalität von zwischen größer zwei und kleiner vier und einer Hydroxylzahl von zwischen größer oder gleich 200 mmol OH/kg und kleiner oder gleich 2000 mmol OH/ kg stammende Stoffmengenanteil an Hydroxylgruppen zwischen einschließlich 2,5 % und einschließlich 50 %, bevorzugt zwischen einschließlich 5,0 % und einschließlich 40 %, besonders bevorzugt zwischen einschließlich 7,5 % und einschließlich 30 % aller an der zur Bildung des haftklebrigen, biologisch abbaubaren, chemischen Umsetzungsproduktes eingebrachten Hydroxylgruppen beträgt.

7. Haftklebriges, biologisch abbaubares, chemisches Umsetzungsprodukt nach zumindest einem der vorangegangenen Ansprüche,
**dadurch gekennzeichnet, dass**

• zumindest eines der aliphatischen Polyester-Polyole eine Hydroxyl-Funktionalität von zwischen größer zwei und kleiner vier und eine Hydroxylzahl von zwischen größer oder gleich 200 mmol OH/kg und kleiner oder gleich 2000 mmol OH/kg hat und
• zumindest eines der aliphatischen Polyester-Polyole eine Hydroxyl-Funktionalität von zwischen kleiner oder gleich zwei und größer eins und eine Hydroxylzahl von zwischen größer oder gleich 200 mmol OH/kg und kleiner oder gleich 2000 mmol OH/kg hat,

wobei der von den aliphatischen Polyester-Polyolen mit einer Hydroxyl-Funktionalität von zwischen größer zwei und kleiner vier und einer Hydroxylzahl von zwischen größer oder gleich 200 mmol OH/kg und kleiner oder gleich 2000 mmol OH/ kg stammende Stoffmengenanteil an Hydroxylgruppen zwischen einschließlich 2,5 % und einschließlich 50 %, bevorzugt zwischen einschließlich 5,0 % und einschließlich 40 %, besonders bevorzugt zwischen einschließlich 7,5 % und einschließlich 30 % aller an der zur Bildung des haftklebrigen, biologisch abbaubaren, chemischen Umsetzungsproduktes eingebrachten Hydroxylgruppen beträgt.

8. Haftklebriges, biologisch abbaubares, chemisches Umsetzungsprodukt nach zumindest einem der vorangegangen Ansprüche,
**dadurch gekennzeichnet, dass**
mindestens einer der aliphatischen Polyester-Polyole ein Polycaprolacton-Polyol ist.

9. Haftklebriges, biologisch abbaubares, chemisches Umsetzungsprodukt nach zumindest einem der vorangegangen Ansprüche,
**dadurch gekennzeichnet, dass**
mindestens eines der aliphatischen Polyester-Polyole ein Adipat ist, welches Ethylenglykol oder Diethylenglykol als Monomerbaustein enthält.

10. Haftklebriges, biologisch abbaubares, chemisches Umsetzungsprodukt nach zumindest einem der vorangegangen Ansprüche,
**dadurch gekennzeichnet, dass**
zumindest eines der aliphatischen Diisocyanate 4,4'-Diisocyanatodicylohexylmethan oder Hexamethylendiisocyanat, bevorzugt 4,4'-Diisocyanatodicylohexylmethan ist.

11. Haftklebriges, biologisch abbaubares, chemisches Umsetzungsprodukt nach zumindest einem der vorangegangen Ansprüche,
**dadurch gekennzeichnet, dass**
der Kettenverlängerer 2-Methyl-1,3-Propandiol, 3-Methyl-1,5-Pentandiol, Ethylenglykol oder besonders bevorzugt Diethylenglykol, Triethylenglykol oder Tetraethylenglykol ist.

12. Biologisch abbaubarer Haftklebstoff oder Haftstoff, erhalten durch chemische Vernetzung eines haftklebrigen, biologisch abbaubaren, chemischen Umsetzungsproduktes nach zumindest einem der vorangegangenen Ansprüche.

13. Biologisch abbaubarer Haftklebstoff oder Haftstoff, erhalten durch chemische Vernetzung eines haftklebrigen, biologisch abbaubaren, chemischen Umsetzungsproduktes nach zumindest einem der vorangegangenen Ansprüche,
**dadurch gekennzeichnet, dass**
die chemische Vernetzung des haftklebrigen, biologisch abbaubaren, chemischen Umsetzungsproduktes durch Umsetzung des haftklebrigen, biologisch abbaubaren, chemischen Umsetzungsproduktes mit einem Diisocyanat, Triisocyanat oder höher funktionellem Isocyanat oder einem Gemisch der genannten Isocyanate erfolgt, wobei das Verhältnis der Gesamtanzahl aller Isocyanat-Gruppen zur Gesamtanzahl aller Hydroxylgruppen der an der chemischen Umsetzung zum haftklebrigen, biologisch abbaubaren, chemischen Umsetzungsprodukt und der anschließenden chemischen Vernetzung zum biologisch abbaubaren Haftklebstoff oder Haftstoff insgesamt eingebrachten Stoffe kleiner 1,0 beträgt, bevorzugt kleiner 0,95 beträgt, besonders bevorzugt kleiner oder gleich 0,9 beträgt.

14. Verfahren zur Herstellung eines haftklebrigen, biologisch abbaubaren, chemischen Umsetzungsproduktes oder eines chemisch vernetzten Haftklebstoffes oder Haftstoffes nach zumindest einem der vorangegangenen Ansprüche,
**dadurch gekennzeichnet, dass**
die Herstellung lösemittelfrei oder in einem organischen Lösemittel oder in einem wässrigen Medium erfolgt.

15. Verwendung eines haftklebrigen, biologisch abbaubaren, chemischen Umsetzungsproduktes oder eines chemisch vernetzten Haftklebstoffes oder Haftstoffes nach zumindest einem der vorangegangenen Ansprüche in einem ein- oder beidseitig haftklebenden Klebeband oder in einer ein- oder beidseitig haftenden Adhäsionsfolie.

**Claims**

1. Pressure-sensitively adhesive, biodegradable, chemical reaction product of

    • at least one or more aliphatic polyester polyols having a hydroxyl functionality of in each case between greater than two and less than four
    • at least one or more aliphatic polyester polyols having a hydroxyl functionality of in each case between less than or equal to two and greater than one
    • at least one or more in each case doubly hydroxyl-functionalized chain extenders having a molecular weight of in each case less than or equal to 200 g/mol, and
    • at least one or more aliphatic diisocyanates,

    **characterized in that**
    the ratio of the total number of isocyanate groups to the total number of hydroxyl groups in the substances introduced in the chemical reaction to give the pressure-sensitively adhesive, biodegradable, chemical reaction product is between greater than or equal to 0.4 and less than 1.0, preferably between greater than or equal to 0.6 and less than or equal to 0.9.

2. Pressure-sensitively adhesive, biodegradable, chemical reaction product according to Claim 1,
    **characterized in that**
    the pressure-sensitively adhesive, biodegradable, chemical reaction product is a hydroxyl-functionalized polyurethane hotmelt prepolymer.

3. Pressure-sensitively adhesive, biodegradable, chemical reaction product according to at least one of the preceding claims,
    **characterized in that**
    at least one of the aliphatic polyester polyols has a hydroxyl number of between greater than or equal to 200 mmol OH/kg and less than or equal to 2000 mmol OH/kg.

4. Pressure-sensitively adhesive, biodegradable, chemical reaction product according to at least one of the preceding claims,
    **characterized in that**
    at least one of the aliphatic polyester polyols having a hydroxyl functionality of between greater than two and less than four has a hydroxyl number of between greater than or equal to 200 mmol OH/kg and less than or equal to 2000 mmol OH/kg.

5. Pressure-sensitively adhesive, biodegradable, chemical reaction product according to at least one of the preceding claims,
    **characterized in that**
    the amount-of-substance fraction of hydroxyl groups originating from the aliphatic polyester polyols having a hydroxyl functionality of between greater than two and less than four is at least 2.5%, preferably at least 5%, more preferably at least 7.5% of all hydroxyl groups introduced for forming the pressure-sensitively adhesive, biodegradable, chemical reaction product.

6. Pressure-sensitively adhesive, biodegradable, chemical reaction product according to at least one of the preceding claims,
**characterized in that**

• at least one of the aliphatic polyester polyols has a hydroxyl functionality of between greater than two and less than four and a hydroxyl number of between greater than or equal to 200 mmol OH/kg and less than or equal to 2000 mmol OH/kg and
• at least one of the aliphatic polyester polyols has a hydroxyl functionality of between less than or equal to two and greater than one and a hydroxyl number of between greater than or equal to 200 mmol OH/kg and less than or equal to 8000 mmol OH/kg,

and the amount-of-substance fraction of hydroxyl groups originating from the aliphatic polyester polyols having a hydroxyl functionality of between greater than two and less than four and a hydroxyl number of between greater than or equal to 200 mmol OH/kg and less than or equal to 2000 mmol OH/kg is between 2.5% inclusive and 50% inclusive, preferably between 5.0% inclusive and 40% inclusive, more preferably between 7.5% inclusive and 30% inclusive of all hydroxyl groups introduced for forming the pressure-sensitively adhesive, biodegradable, chemical reaction product.

7. Pressure-sensitively adhesive, biodegradable, chemical reaction product according to at least one of the preceding claims,
**characterized in that**

• at least one of the aliphatic polyester polyols has a hydroxyl functionality of between greater than two and less than four and a hydroxyl number of between greater than or equal to 200 mmol OH/kg and less than or equal to 2000 mmol OH/kg and
• at least one of the aliphatic polyester polyols has a hydroxyl functionality of between less than or equal to two and greater than one and a hydroxyl number of between greater than or equal to 200 mmol OH/kg and less than or equal to 2000 mmol OH/kg,

and the amount-of-substance fraction of hydroxyl groups originating from the aliphatic polyester polyols having a hydroxyl functionality of between greater than two and less than four and a hydroxyl number of between greater than or equal to 200 mmol OH/kg and less than or equal to 2000 mmol OH/kg is between 2.5% inclusive and 50% inclusive, preferably between 5.0% inclusive and 40% inclusive, more preferably between 7.5% inclusive and 30% inclusive of all hydroxyl groups introduced for forming the pressure-sensitively adhesive, biodegradable, chemical reaction product.

8. Pressure-sensitively adhesive, biodegradable, chemical reaction product according to at least one of the preceding claims,
**characterized in that**
at least one of the aliphatic polyester polyols is a polycaprolactone polyol.

9. Pressure-sensitively adhesive, biodegradable, chemical reaction product according to at least one of the preceding claims,
**characterized in that**
at least one of the aliphatic polyester polyols is an adipate which comprises ethylene glycol or diethylene glycol as monomer unit.

10. Pressure-sensitively adhesive, biodegradable, chemical reaction product according to at least one of the preceding claims,
**characterized in that**
at least one of the aliphatic diisocyanates is 4,4'-diisocyanatodicyclohexylmethane or hexamethylene diisocyanate, preferably 4,4'-diisocyanatodicyclohexylmethane.

11. Pressure-sensitively adhesive, biodegradable, chemical reaction product according to at least one of the preceding

# EP 3 083 732 B1

claims,
**characterized in that**
the chain extender is 2-methyl-1,3-propanediol, 3-methyl-1,5-pentanediol, ethylene glycol or, more preferably, diethylene glycol, triethylene glycol or tetraethylene glycol.

12. Biodegradable pressure-sensitive adhesive or bonding material obtained by chemically crosslinking a pressure-sensitively adhesive, biodegradable, chemical reaction product according to at least one of the preceding claims.

13. Biodegradable pressure-sensitive adhesive or bonding material obtained by chemically crosslinking a pressure-sensitively adhesive, biodegradable, chemical reaction product according to at least one of the preceding claims,
**characterized in that**
the chemical crosslinking of the pressure-sensitively adhesive, biodegradable, chemical reaction product is accomplished by reacting the pressure-sensitively adhesive, biodegradable, chemical reaction product with a diisocyanate, triisocyanate or higher-functionality isocyanate or with a mixture of said isocyanates, the ratio of the total number of all isocyanate groups to the total number of all hydroxyl groups in the substances introduced overall in the chemical reaction to give the pressure-sensitively adhesive, biodegradable, chemical reaction product and in the subsequent chemical crosslinking to give the biodegradable pressure-sensitive adhesive or bonding material is less than 1.0, is preferably less than 0.95, is more preferably less than or equal to 0.9.

14. Method for producing a pressure-sensitively adhesive, biodegradable, chemical reaction product or a chemically crosslinked pressure-sensitive adhesive or bonding material according to at least one of the preceding claims,
**characterized in that**
the producing takes place solventlessly or in an organic solvent or in an aqueous medium.

15. Use of a pressure-sensitively adhesive, biodegradable, chemical reaction product or a chemically crosslinked pressure-sensitive adhesive or bonding material according to at least one of the preceding claims in a single-sidedly or double-sidedly pressure-sensitive adhesive tape or in a single-sidedly or double-sidedly adhering cling film.

## Revendications

1. Produit de transformation chimique, auto-adhésif, biodégradable composé

   • d'au moins un ou plusieurs polyester-polyols aliphatiques comportant une fonctionnalité hydroxyle à chaque fois comprise entre supérieure à deux et inférieure à quatre
   • d'au moins un ou plusieurs polyester-polyols aliphatiques comportant une fonctionnalité hydroxyle à chaque fois comprise entre inférieure ou égale à deux et supérieure à un
   • d'au moins un ou plusieurs extenseurs de chaîne à chaque fois fonctionnalisés par deux hydroxyle présentant un poids moléculaire à chaque fois inférieur ou égal à 200 g/mole et
   • d'au moins un ou plusieurs diisocyanates aliphatiques,

   **caractérisé en ce que** le rapport du nombre total des groupes isocyanate au nombre total des groupes hydroxyle des matières introduites lors de la transformation chimique pour le produit de transformation chimique, auto-adhésif, biodégradable, est compris entre supérieur ou égal à 0,4 et inférieur à 1,0, préférablement entre supérieur ou égal à 0,6 et inférieur ou égal à 0,9.

2. Produit de transformation chimique, auto-adhésif, biodégradable selon la revendication 1, **caractérisé en ce que** le produit de transformation chimique, auto-adhésif, biodégradable est un prépolymère d'adhésif thermofusible en polyuréthane fonctionnalisé par hydroxyle.

3. Produit de transformation chimique, auto-adhésif, biodégradable selon au moins l'une quelconque des revendications précédentes, **caractérisé en ce qu'**au moins un des polyester-polyols aliphatiques possède un indice d'hydroxyle compris entre supérieur ou égal à 200 mmoles de OH/kg et inférieur ou égal à 2000 mmoles de OH/kg.

4. Produit de transformation chimique, auto-adhésif, biodégradable selon au moins l'une quelconque des revendications précédentes, **caractérisé en ce qu'**au moins un des polyester-polyols aliphatiques présentant une fonctionnalité hydroxyle comprise entre supérieure à deux et inférieure à quatre possède un indice d'hydroxyle compris entre supérieur ou égal à 200 mmoles de OH/kg et inférieur ou égal à 2000 mmoles de OH/kg.

32

**5.** Produit de transformation chimique, auto-adhésif, biodégradable selon au moins l'une quelconque des revendications précédentes, **caractérisé en ce que** la fraction molaire de groupes hydroxyle provenant des polyester-polyols aliphatiques présentant une fonctionnalité hydroxyle comprise entre supérieure à deux et inférieure à quatre est d'au moins 2,5 %, préférablement d'au moins 5 %, particulièrement préférablement d'au moins 7,5 %, par rapport à tous les groupes hydroxyle introduits pour la formation du produit de transformation chimique, auto-adhésif, biodégradable.

**6.** Produit de transformation chimique, auto-adhésif, biodégradable selon au moins l'une quelconque des revendications précédentes, **caractérisé en ce que**

• au moins un des polyester-polyols aliphatiques possède une fonctionnalité hydroxyle comprise entre supérieure à deux et inférieure à quatre et un indice d'hydroxyle compris entre supérieur ou égal à 200 mmoles de OH/kg et inférieur ou égal à 2000 mmoles de OH/kg.
• au moins un des polyester-polyols aliphatiques possède une fonctionnalité hydroxyle comprise entre inférieure ou égale à deux et supérieure à un et un indice d'hydroxyle compris entre supérieur ou égal à 200 mmoles de OH/kg et inférieur ou égal à 8000 mmoles de OH/kg,

la fraction molaire de groupes hydroxyle provenant des polyester-polyols aliphatiques présentant une fonctionnalité hydroxyle comprise entre supérieure à deux et inférieure à quatre et un indice d'hydroxyle compris entre supérieur ou égal à 200 mmoles de OH/kg et inférieur ou égal à 2000 mmoles de OH/kg, étant comprise entre 2,5 % inclus et 50 % inclus, préférablement entre 5,0 % inclus et 40 % inclus, particulièrement préférablement entre 7,5 % inclus et 30 % inclus, par rapport à tous les groupes hydroxyle introduits pour la formation du produit de transformation chimique, auto-adhésif, biodégradable.

**7.** Produit de transformation chimique, auto-adhésif, biodégradable selon au moins l'une quelconque des revendications précédentes, **caractérisé en ce que**

• au moins un des polyester-polyols aliphatiques possède une fonctionnalité hydroxyle comprise entre supérieure à deux et inférieure à quatre et un indice d'hydroxyle compris entre supérieur ou égal à 200 mmoles de OH/kg et inférieur ou égal à 2000 mmoles de OH/kg et
• au moins un des polyester-polyols aliphatiques possède une fonctionnalité hydroxyle comprise entre inférieure ou égale à deux et supérieure à un et un indice d'hydroxyle compris entre supérieur ou égal à 200 mmoles de OH/kg et inférieur ou égal à 2000 mmoles de OH/kg.

la fraction molaire de groupes hydroxyle provenant des polyester-polyols aliphatiques présentant une fonctionnalité hydroxyle comprise entre supérieure à deux et inférieure à quatre et un indice d'hydroxyle compris entre supérieur ou égal à 200 mmoles de OH/kg et inférieur ou égal à 2000 mmoles de OH/kg, étant comprise entre 2,5 % inclus et 50 % inclus, préférablement entre 5,0 % inclus et 40 % inclus, particulièrement préférablement entre 7,5 % inclus et 30 % inclus, par rapport à tous les groupes hydroxyle introduits pour la formation du produit de transformation chimique, auto-adhésif, biodégradable.

**8.** Produit de transformation chimique, auto-adhésif, biodégradable selon au moins l'une quelconque des revendications précédentes, **caractérisé en ce qu'**au moins un des polyester-polyols aliphatiques est un polycaprolactone-polyol.

**9.** Produit de transformation chimique, auto-adhésif, biodégradable selon au moins l'une quelconque des revendications précédentes, **caractérisé en ce qu'**au moins un des polyester-polyols aliphatiques est un adipate, qui contient de l'éthylèneglycol ou du diéthylèneglycol en tant qu'unité monomérique.

**10.** Produit de transformation chimique, auto-adhésif, biodégradable selon au moins l'une quelconque des revendications précédentes, **caractérisé en ce qu'**au moins un des diisocyanates aliphatiques est le 4,4'-diisocyanatodicyclohexylméthane ou le diisocyanate d'hexaméthylène, préférablement le 4,4'-diisocyanatodicyclohexylméthane.

**11.** Produit de transformation chimique, auto-adhésif, biodégradable selon au moins l'une quelconque des revendications précédentes, caractérisé en ce l'extenseur de chaîne est le 2-méthyle-1,3-propanediol, le 3-méthyl-1,5-pentanediol, l'éthylèneglycol ou particulièrement préférablement le diéthylèneglycol, le triéthylèneglycol ou le tétraéthylèneglycol.

**12.** Substance adhésive ou auto-adhésive, biodégradable, obtenue par la réticulation chimique d'un produit de transformation chimique, auto-adhésif, biodégradable selon au moins l'une quelconque des revendications précédentes.

**13.** Substance adhésive ou auto-adhésive, biodégradable, obtenue par la réticulation chimique d'un produit de transformation chimique, auto-adhésif, biodégradable selon au moins l'une quelconque des revendications précédentes, **caractérisée en ce que**
la réticulation chimique du produit de transformation chimique, auto-adhésif, biodégradable est réalisée par la transformation d'un produit de transformation chimique, auto-adhésif, biodégradable avec un diisocyanate, un triisocyanate ou avec un isocyanate à fonctionnalité plus élevée, ou avec un mélange des isocyanates indiqués, le rapport du nombre total de tous les groupes isocyanate au nombre total de tous les groupes hydroxyle des matières introduites au total lors de la transformation chimique pour le produit de transformation chimique, auto-adhésif, biodégradable et de la réticulation chimique ultérieure pour la substance adhésive ou auto-adhésive, biodégradable, étant inférieur à 1,0, préférablement inférieur à 0,95, particulièrement préférablement inférieur ou égal à 0,9.

**14.** Procédé pour la préparation d'un produit de transformation chimique, auto-adhésif, biodégradable ou d'une substance adhésive ou auto-adhésive, chimiquement réticulée selon au moins l'une quelconque des revendications précédentes, **caractérisé en ce que** la préparation est réalisée sans solvant ou dans un solvant organique ou dans un milieu aqueux.

**15.** Utilisation d'un produit de transformation chimique, auto-adhésif, biodégradable ou d'une substance adhésive ou auto-adhésive, chimiquement réticulée selon au moins l'une quelconque des revendications précédentes, dans un ruban adhésif auto-adhésif sur une face ou sur les deux faces ou dans une feuille adhésive collante sur une face ou sur les deux faces.

1

3

2

Fig. 1

1

2

3

2

Fig. 2

1

2

4

Fig. 3

**IN DER BESCHREIBUNG AUFGEFÜHRTE DOKUMENTE**

**In der Beschreibung aufgeführte Patentdokumente**

- GB 2128199 A
- WO 9839157 A1
- WO 9914261 A1
- EP 1849811 B1
- US 5698621 A
- GB 2368300 A
- DE 20208094 U
- DE 10012261 A1
- WO 0168364 A1
- WO 9700772 A1
- US 5292560 A
- DE 19722627 A1
- EP 1656669 B1
- EP 2325220 A1
- JP 2007070422 A
- JP 63189486 A
- JP 08157798 A
- DE 19532771 A1
- DE 2845541 A

**In der Beschreibung aufgeführte Nicht-Patentliteratur**

- **SATAS.** Handbook of Pressure Sensitive Adhesive Technology. 1999, 153-203